# EUROPEAN PATENT APPLICATION

(11) **EP 4 053 004 A1**
(43) Date of publication of application: **07.09.2022**
(21) Application number: 20903365.3
(22) Date of filing: 18.12.2020
(51) Int. Cl.: B62D 61/10, B62B 3/02

(54) **VEHICLE**

(30) Priority: 19.12.2019 WO PCT/JP2019/049795
(71) Applicant: Yamaha Hatsudoki Kabushiki Kaisha, Iwata-shi, Shizuoka 438-8501 (JP); Pigeon Corporation, Chuo-ku, Tokyo 103-8480 (JP)
(72) Inventor: HANDA Takeshi, Iwata-shi, Shizuoka 438-8501 (JP); HIRAYAMA Yosuke, Iwata-shi, Shizuoka 438-8501 (JP); UCHIYAMA Toshifumi, Iwata-shi, Shizuoka 438-8501 (JP); TSUDA Kenichiro, Tokyo 103-8480 (JP)
(74) Representative: Stöckeler, Ferdinand
(86) International application number: PCT/JP2020/047537
(87) International publication number: WO 2021/125348

(57) **Abstract**

A vehicle that maintains comfort by suppressing leaning of a vehicle body, for example, even when a road is sloped relative to a left-right direction of the vehicle body. A vehicle 1 includes a linkage mechanism 5 that is operated in a case where one of a left front wheel 31 or a right front wheel 32 is located above or below the other in a top-bottom direction. The linkage mechanism 5 is of a parallel four-bar linkage type and includes an upper cross member 51, a lower cross member 52, a left side member 53, and a right side member 54. The linkage mechanism 5 includes a stopper 7 configured to restrict an operation of the linkage mechanism 5, and restrict swing of the upper cross member 51 about a first-center-swing axis UI and swing of the lower cross member 52 about a second-center-swing axis DI

## Description

### TECHNICAL FIELD

The present teaching relates to a vehicle.

### BACKGROUND ART

A vehicle known to date includes a vehicle body that stands on its own while the vehicle is stopped and does not lean while the vehicle is turning on a flat road surface, left and right rear wheels which are supported by the vehicle body and whose traveling direction is fixed in the front-rear direction, and a front wheel supported by the vehicle body.

As such a vehicle, Patent Document 1, for example, discloses a three-wheeled vehicle including a caster front wheel. Patent Document 2, for example, discloses a four-wheeled vehicle including left and right front wheels.

The number of wheels of a three-wheeled vehicle is smaller than that of a four-wheeled vehicle. Thus, the three-wheeled vehicle has higher mobility than that of the four-wheeled vehicle. On the other hand, the number of wheels of the four-wheeled vehicle is larger than that of the three-wheeled vehicle. Thus, the four-wheeled vehicle rolls less in the right direction and in the left right direction, than the three-wheeled vehicle.

A vehicle body of the three-wheeled vehicle moves up and down by a step on a road surface when the vehicle travels on the road with the step. The three-wheeled vehicle has one front wheel. Thus, the vehicle body of the three-wheeled vehicle is less likely to lean in the left direction or in the right direction. On the other hand, the four-wheeled vehicle has left and right front wheels. Thus, when one of the front wheels of the four-wheeled vehicle is located on an uneven portion of a road surface, a vehicle body of the four-wheeled vehicle leans in the left direction or in the right direction. However, a center portion of the vehicle body of the four-wheeled vehicle moves up and down less.

As described above, a behavior of the three-wheeled vehicle is different from a behavior of the four-wheeled vehicle. Thus, the four-wheeled vehicle is more preferable than the three-wheeled vehicle from the viewpoint of suppressing upward and downward movement of the vehicle body. From the view point of suppressing leaning of the vehicle body in the in the left direction or in the right direction, the three-wheeled vehicle is more preferable than the four-wheeled vehicle.

### CITATION LIST

### PATENT DOCUMENT

Patent Document 1. Japanese Patent No. 5138231
Patent Document 2. Japanese Patent No.6378991

### SUMMARY OF INVENTION

### TECHNICAL PROBLEM

The vehicles described above are expected to travel in various manners, such as traveling across a step and being stopped on a sloped road surface. However, as described above, a behavior of the three-wheeled vehicle is different from that of the four-wheeled vehicle. Thus, it is difficult for the vehicles described above to suppress both upward and downward movement of the vehicle body and leaning of the vehicle body. On the other hand, there has been required a vehicle capable of maintaining comfort in various application scenes, such as traveling across a step and being stopped on a sloped road surface.

It is therefore an object of the present teaching to provide a vehicle capable of maintaining comfort in various traveling scenes or the like by suppressing upward and downward movement of a vehicle body and leaning of the vehicle.

### SOLUTION TO PROBLEM

Inventors of the present teaching studied a configuration for maintaining comfort by suppressing leaning of a vehicle body, for example, when a road surface is sloped relative to the left-right direction of the vehicle body. Through an intensive study, the inventors have reached the following configuration.

A vehicle according to one embodiment of the present teaching is a vehicle including a vehicle body configured to stand on its own while the vehicle is stopped and configured not to lean while the vehicle is turning, on a flat road surface, a left rear wheel and a right rear wheel supported by the vehicle body, a traveling direction of each of the left rear wheel and the right rear wheel being fixed in a front-rear direction, and a left front wheel and a right front wheel supported by the vehicle body. The vehicle includes a front-wheel-displacement-linkage mechanism including a first swing lever that is a member extending in a left-right direction, the first swing lever having a center portion in the left-right direction supported by the vehicle body to be swingable about a first-center-swing axis, the first-center-swing axis extending in the front-rear direction of the vehicle body, a second swing lever that is a member extending in the left-right direction, the second swing lever having a center portion in the left-right direction located below the first swing lever and supported by the vehicle body to be swingable about a second-center-swing axis, the second-center-swing axis extending in the front-rear direction of the vehicle body, a left-front-wheel support that is a member extending in the top-bottom direction, the left-front-wheel support being supported by a left end portion of the first swing lever to be swingable about a first-left-swing axis extending in the front-rear direction of the vehicle body, the left-front-wheel support being supported by a left end portion of the second swing lever to be swingable about a second-left-swing axis extending in the front-rear direction of the vehicle body, the left-front-wheel support supporting the left front wheel, a right-front-wheel support that is a member extending in the top-bottom direction, the right-front-wheel support being supported by a right end portion of the first swing lever to be swingable about a first-right-swing axis extending in the front-rear direction of the vehicle body, the right-front-wheel support being supported by a right end portion of the second swing lever to be swingable about a second-right-swing axis extending in the front-rear direction of the vehicle body, the right-front-wheel support supporting the right front wheel, and a stopper configured to restrict swing of the first swing lever about the first-center-swing axis and swing of the second swing lever about the second-center-swing axis, and the front-wheel-displacement-linkage mechanism is configured to support the left front wheel and the right front wheel on the vehicle body such that the left front wheel and the right front wheel are displaceable in the top-bottom direction, and to restrict leaning of the vehicle body in the left direction or in the right direction by displacement of the left front wheel and the right front wheel in the top-bottom direction relative to the vehicle body. The stopper is provided in at least one of the front-wheel-displacement-linkage mechanism or the vehicle body such that a barycenter of the vehicle is located within a range of a first triangle in a plan view in a state where the stopper restricts an operation of the front-wheel-displacement-linkage mechanism, the first triangle being formed by a ground point of the left front wheel, a ground point of the right front wheel, and a ground point of a lower one of the left rear wheel or the right rear wheel in the top-bottom direction.

While the vehicle is stopped on a road surface sloped in the left-right direction of the vehicle body, in the vehicle including the vehicle-displacement-linkage mechanism, one of the left rear wheel or the right rear wheel might rise relative to the road surface in some cases. When one of the left rear wheel or the right rear wheel rises relative to the road surface, the vehicle-displacement-linkage mechanism is operated. When the vehicle-displacement-linkage mechanism is operated, the first swing lever and the second swing lever swingably supporting the left-front-wheel support and the right-front-wheel support swing with respect to the vehicle body. Accordingly, the left front wheel supported by the left-front-wheel support and the right-front-wheel support supported by the right-front-wheel support is displaced in the top-bottom direction relative to the vehicle body. Thus, in a case where the height of the road surface varies in the left-right direction of the vehicle, the vehicle leans to a lower portion of the sloped road surface.

As described above, when the vehicle leans along the slope of the road surface, the operation of the vehicle-displacement-linkage mechanism continues. Accordingly, the barycenter of the vehicle might be located outside a range of a triangle formed by connecting the ground points of the wheels in a plan view.

On the other hand, in the configuration described above, swing of the first swing lever and the second swing lever is restricted by the stopper such that the barycenter of the vehicle is located within the range of the first triangle in a plan view, and displacement of the left front wheel and the right front wheel in the top-bottom direction is restricted. In this manner, the barycenter of the vehicle can be located within a preferred range in a plan view with leaning of the vehicle body being suppressed.

As a result, the configuration described above can result in a vehicle which is capable of suppressing leaning of the vehicle body, for example, and maintaining comfort.

In another aspect, the vehicle according to one embodiment of the present teaching preferably includes the following configuration. The stopper restricts swing of the first swing lever about the first-center-swing axis and swing of the second swing lever about the second-center-swing axis in a case where the barycenter of the vehicle is located within the range of the first triangle and is located outside a second triangle in a plan view, the second triangle being formed by an intermediate point between the ground point of the left front wheel and the ground point of the right front wheel, a ground point of the left rear wheel, and a ground point of the right rear wheel.

With the configuration described above, the position at which the stopper operate is determined in consideration of the position of the barycenter of the vehicle.

As a result, the configuration described above can suppress leaning of the vehicle body, for example, and maintain comfort.

In another aspect, the vehicle according to one embodiment of the present teaching preferably includes the following configuration. The stopper restricts swing of the first swing lever about the first-center-swing axis and swing of the second swing lever about the second-center-swing axis in a case where, in a plan view, the barycenter of the vehicle is located within the range of the first triangle and is located at a position closer to an outline connecting the ground point of the lower one of the left rear wheel or the right rear wheel in the top-bottom direction and a ground point of a lower one of the left front wheel or the right front wheel in the top-bottom direction in an outline of the first triangle than an outline connecting the ground point of the lower one of the left rear wheel or the right rear wheel in the top-bottom direction to the intermediate point in an outline of the second triangle, in the left-right direction.

With the configuration described above, influence on an operating range of the vehicle-displacement-linkage mechanism due to the presence of the stopper is reduced, and leaning of the vehicle body, for example, is suppressed with upward and downward movement of the left front wheel or the right front wheel being handled.

In another aspect, the vehicle according to one embodiment of the present teaching preferably includes the following configuration. The stopper is disposed between a member that is movable relative to the vehicle body by an operation of the front-wheel-displacement-linkage mechanism and a member that is non-movable relative to the vehicle body by an operation of the front-wheel-displacement-linkage mechanism.

When the front-wheel-displacement-linkage mechanism is operated, the member constituting the front-wheel-displacement-linkage mechanism moves relative to the vehicle body. With the configuration described above, the stopper can restrict movement of the front-wheel-displacement-linkage mechanism relative to the vehicle body. Accordingly, the vehicle can restrict the amount of movement of a movable portion with respect to a non-movable portion such as the vehicle body. Thus, in the vehicle, the barycenter of the vehicle that moves by an operation of the front-wheel-displacement-linkage mechanism can be easily positioned within a predetermined range. As a result, leaning of the vehicle body, for example, can be easily suppressed.

In another aspect, the vehicle according to one embodiment of the present teaching preferably includes the following configuration. The left-front-wheel support or the right-front-wheel support includes a support member extending in a direction in which the left-front-wheel support or the right-front-wheel support moves by an operation of the front-wheel-displacement-linkage mechanism, and a first contact member and a second contact member supported by the support member with a predetermined interval. The stopper is provided in the vehicle body to be disposed between the first contact member and the second contact member, and is configured to be brought into contact with the first contact member or the second contact member by movement of the support member due to movement of the left-front-wheel support or the right-front-wheel support.

With the configuration described above, the stopper directly restricts movement of the left-front-wheel support supporting the left front wheel or the right-front-wheel support supporting the right front wheel that moves by an operation of the front-wheel-displacement-linkage mechanism. The vehicle can suppress displacement of the left front wheel or the right front wheel due to warpage of the front-wheel-displacement-linkage mechanism when movement of the left front wheel or the right front wheel is restricted. In addition, the range of movement of the left-front-wheel support or the right-front-wheel support can be determined based on the position of the first contact member and the second contact member relative to the stopper. Accordingly, the range in which the front-wheel-displacement-linkage mechanism can be operated can be easily restricted. Thus, the barycenter of the vehicle can be easily positioned within a predetermined range. As a result, leaning of vehicle body, for example, can be easily suppressed.

In another aspect, the vehicle according to one embodiment of the present teaching preferably includes the following configuration. The left front wheel is located closer to the left rear wheel than the first-center-swing axis and the second-center-swing axis when the vehicle is seen from the front, and the right front wheel is located closer to the right rear wheel than the first-center-swing axis and the second-center-swing axis when the vehicle is seen from the front.

With this configuration, the left front wheel can be disposed close to the left rear wheel, and the right front wheel can be disposed close to the right rear wheel, when the vehicle is seen from the front. Accordingly, the vehicle is resistant to rolls in the left-right direction, as compared to a case where the left front wheel is close to the first-center-swing axis and the second-center-swing axis and a case where the right front wheel is close to the first-center-swing axis and the second-center-swing axis, when the vehicle is seen from the front.

As a result, the configuration described above can suppress leaning of the vehicle body, for example, and maintain comfort.

In another aspect, the vehicle according to one embodiment of the present teaching preferably includes the following configuration. The front-wheel-displacement-linkage mechanism includes at least one of a spring element or a buffer element, the spring element or the buffer element being configured to apply a resistance for reducing energy exerted on the vehicle body to the first swing lever and the second swing lever when the first swing lever and the second swing lever swing in a range of swing of the first swing lever about the first-center-swing axis and a range of swing of the second swing lever about the second-center-swing axis, and the stopper restricts swing of the first swing lever about the first-center-swing axis and swing of the second swing lever about the second-center-swing axis in a state where the at least one of the spring element or the buffer element applies the resistance to the first swing lever and the second swing lever.

With the configuration described above, in the vehicle body, energy exerted on the vehicle body due to regulation of the stopper is reduced by the resistance of at least one of the spring element or the buffer element.

As a result, in this embodiment, the stopper is operated with a small impact so that comfort can be enhanced.

The terminology used herein is for the purpose of describing particular embodiments only and is not intended to be limiting of the invention.

As used herein, the term "and/or" includes any and all combinations of one or more of the associated listed items.

It will be further understood that the terms "including," "comprising" or "having" and variations thereof when used in this specification, specify the presence of stated features, steps, elements, components, and/or their equivalents but do not preclude the presence or addition of one or more, steps, operations, elements, components, and/or groups thereof.

It will be further understood that the terms "mounted," "connected," "coupled," and/or their equivalents are used broadly and encompass both direct and indirect mounting, connecting and coupling. Further, "connected" and "coupled" are not restricted to physical or mechanical connections or couplings, and can include connections or couplings, whether direct or indirect.

Unless otherwise defined, all terms (including technical and scientific terms) used herein have the same meaning as commonly understood by one having ordinary skill in the art to which this invention belongs.

It will be further understood that terms, such as those defined in commonly used dictionaries, should be interpreted as having a meaning that is consistent with their meaning in the context of the relevant art and the present disclosure and will not be interpreted in an idealized or overly formal sense unless expressly so defined herein.

In describing the invention, it will be understood that a number of techniques and steps are disclosed. Each of these has individual benefit and each can also be used in conjunction with one or more, or in some cases all, of the other disclosed techniques.

Accordingly, for the sake of clarity, this description will refrain from repeating every possible combination of the individual steps in an unnecessary fashion. Nevertheless, the specification and claims should be read with the understanding that such combinations are entirely within the scope of the invention and the claims.

An embodiment of a vehicle according to the present teaching will be herein described.

In the following description, for purposes of explanation, numerous specific details are set forth in order to provide a thorough understanding of the present invention. It will be evident, however, to one skilled in the art that the present invention may be practiced without these specific details.

The present disclosure is to be considered as an exemplification of the invention, and is not intended to limit the invention to the specific embodiments illustrated by the figures or description below.

### [Front Wheel]

A front wheel herein refers to one of a plurality of wheels of a vehicle located in a front portion of the vehicle in the traveling direction of the vehicle. The front and rear of the vehicle are defined depending on the traveling direction of the vehicle. In this manner, the front wheel herein is defined from the plurality of wheels of the vehicle based on the traveling direction of the vehicle. Thus, for example, in a case where the traveling mode of the vehicle is switchable between a first traveling mode in which the vehicle can travel in one direction and a second traveling mode in which the vehicle can travel in the opposite direction, the front portion and the rear portion of the vehicle are switched between the first traveling mode and the second traveling mode. Thus, a front-wheel-displacement-linkage mechanism that supports the front wheels in the front portion of the vehicle in the first traveling mode of the vehicle supports the rear wheels in the rear portion of the vehicle in the second traveling mode of the vehicle, for example. A front-wheel-displacement-linkage mechanism that supports the rear wheels in the rear portion of the vehicle in the first traveling mode of the vehicle, supports the front wheels in the front portion of the vehicle in the second traveling mode of the vehicle, for example.

### [Stopper]

A stopper herein refers to a member that restricts swing of a first swing lever and a second swing lever.

### [Slope of Road Surface]

A slope of a road surface herein refers to a state where the road surface has a tilt angle with respect to a horizontal plane.

### [Lower One of Left and Right Wheels in Top-bottom Direction]

A lower one of left and right wheels in the top-bottom direction herein refers to a wheel located below the other wheel in the top-bottom direction in a case where a vehicle leans in the left direction or in the right direction, for example. That is, a lower one of the left and right wheels refers to a wheel having a lower height in a case where the heights of the left and right wheels from the horizontal plane are compared.

### ADVANTAGEOUS EFFECTS OF INVENTION

The present teaching can provide a vehicle that includes left and right rear wheels whose traveling direction is fixed at a front-rear direction and left and right front wheels and that is capable of maintaining comfort by suppressing upward and downward movement of a vehicle body and leaning of the vehicle in various traveling scenes and other situations.

### BRIEF DESCRIPTION OF DRAWINGS

[FIG. 1] FIG. 1 is a left side view schematically illustrating an overall configuration of a vehicle according to a first embodiment.
[FIG. 2] FIG. 2 is a front view schematically illustrating a configuration of a vehicle front portion when the vehicle is seen from the front.
[FIG. 3] FIG. 3 is a view corresponding to FIG. 2 and schematically illustrating an operation of a linkage mechanism in a case where a left front wheel of the vehicle is located above a right front wheel of the vehicle in a top-bottom direction by unevenness of a road surface.
[FIG. 4] FIG. 4 is a view corresponding to FIG. 2 and schematically illustrating an operation of a linkage mechanism in a case where the right front wheel of the vehicle is located above the left front wheel of the vehicle in the top-bottom direction by unevenness of a road surface.
[FIG. 5] FIG. 5 is a plan view schematically illustrating a relationship between wheels and the position of a barycenter of the vehicle according to the first embodiment in a case where a stopper provided in the vehicle does not restrict an operation of the linkage mechanism.
[FIG. 6] FIG. 6 is a front view schematically illustrating a state where the stopper provided in the vehicle according to the first embodiment does not restrict an operation of the linkage mechanism.
[FIG. 7] FIG. 7 is a perspective view schematically illustrating a relationship among the wheels in a case where the linkage mechanism of the vehicle according to the first embodiment is operated.
[FIG. 8] FIG. 8 is a plan view schematically illustrating a relationship among the wheels in the case where the linkage mechanism of the vehicle according to the first embodiment is operated.
[FIG. 9] FIG. 9 is a front view schematically illustrating a state where the stopper provided in the vehicle according to the first embodiment restricts an operation of the linkage mechanism.
[FIG. 10] FIG. 10 is a plan view schematically illustrating a relationship between wheels and the position of a barycenter of a vehicle according to a second embodiment in a case where a stopper provided in the vehicle restricts an operation of a linkage mechanism.
[FIG. 11] FIG. 11 is an enlarged front view schematically illustrating a stopper provided in a vehicle according to a third embodiment.
[FIG. 12] FIG. 12 is an enlarged front view schematically illustrating a state where the stopper provided in the vehicle according to the third embodiment restricts an operation of a linkage mechanism.
[FIG. 13] FIG. 13 is an enlarged front view schematically illustrating another example of the stopper provided in the vehicle according to the third embodiment.
[FIG. 14] FIG. 14 is an enlarged front view schematically illustrating another example of the state where the stopper provided in the vehicle according to the third embodiment restricts an operation of the linkage mechanism.
[FIG. 15] FIG. 15 is a perspective view illustrating an overall configuration of a vehicle according to a fourth embodiment.
[FIG. 16] FIG. 16 is a front view schematically illustrating a configuration of a vehicle front portion when the vehicle according to the fourth embodiment is seen from the front.
[FIG. 17] FIG. 17 is a front view schematically illustrating a state where a linkage mechanism is operated by a slope of a road surface.
[FIG. 18] FIG. 18 is a view schematically illustrating a positional relationship between front wheels and rear wheels when the vehicle is seen from the front.
[FIG. 19] FIG. 19 is a perspective view illustrating an overall configuration of a vehicle according to a fifth embodiment.
[FIG. 20] FIG. 20 is a front view schematically illustrating a configuration of a vehicle front portion when a vehicle according to a sixth embodiment is seen from the front.
[FIG. 21] FIG. 21 is a front view schematically illustrating a state where a linkage mechanism is operated by a slope of a road surface.
[FIG. 22] FIG. 22 shows a front view and a left side view of the vehicle according to the first embodiment side by side.

### DESCRIPTION OF EMBODIMENT

Embodiments will be described hereinafter with reference to the drawings. In the drawings, the same or corresponding parts are denoted by the same reference numerals, and description thereof will not be repeated. The dimensions of components in the drawings do not strictly represent actual dimensions of the components and dimensional proportions of the components.

In the following description, arrow F in the drawings represents a forward direction of a vehicle 1. Arrow B in the drawings represents a rearward direction of the vehicle 1. Arrow U in the drawings represents an upward direction of the vehicle 1. Arrow D in the drawings represents a downward direction of the vehicle 1. Arrow R in the drawings represents a rightward direction of the vehicle 1. Arrow L in the drawings represents a leftward direction of the vehicle 1. In the following description, a traveling direction of the vehicle 1 will be referred to as a forward direction. Thus, a front-rear direction, a left-right direction, and a top-bottom direction of the vehicle 1 respectively refer to a front-rear direction, a left-right direction, and a top-bottom direction in a state where an operator of the vehicle 1 faces in the forward direction (traveling direction) of the vehicle 1.

### [First Embodiment]

### (Overall Configuration)

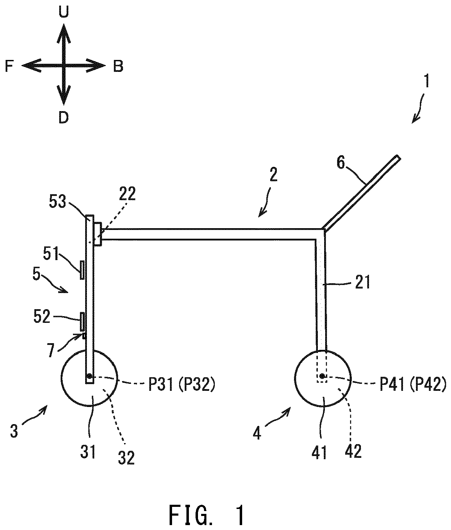

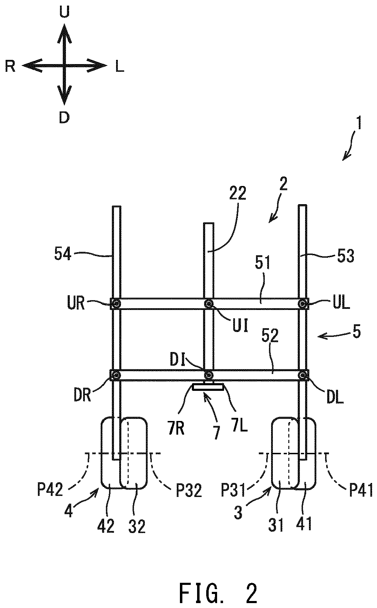

FIG. 1 is a view schematically illustrating a configuration of a vehicle 1 according to a first embodiment. FIG. 2 is a view schematically illustrating a configuration of a vehicle front portion when the vehicle 1 is seen from the front. The vehicle 1 includes a vehicle body 2, a pair of left and right front wheels 3, a pair of left and right rear wheels 4, a linkage mechanism 5 (front-wheel-displacement-linkage mechanism), an operation handle 6, and a stopper 7. In this embodiment, the vehicle 1 is a four-wheeled vehicle. The pair of left and right front wheels 3 is supported by the vehicle body 2 to be rotatable in the front-rear direction with the linkage mechanism 5 interposed therebetween. The pair of left and right rear wheels 4 is supported by the vehicle body 2 to be rotatable in the front-rear direction. The operation handle 6 is connected to the vehicle body 2.

When the operator applies a forward force to the vehicle body 2 with the operation handle 6, the vehicle 1 thereby moves forward. When the operator applies a rearward force to the vehicle body 2 with the operation handle 6, the vehicle 1 thereby moves rearward. When the operator applies a leftward turning force to the vehicle body 2 with the operation handle 6, the vehicle 1 thereby turns leftward. When the operator applies a rightward turning force to the vehicle body 2 with the operation handle 6, the vehicle 1 thereby turns rightward.

That is, the vehicle 1 does not include a driving source. The vehicle 1 does not include a steering mechanism for steering at least one of the pair of left and right front wheels 3 or the pair of left and right rear wheels 4 with the operation handle 6.

The pair of left and right front wheels 3 includes a left front wheel 31 and a right front wheel 32. The left front wheel 31 is supported by the lower end of a left side member 53 of the linkage mechanism 5 described later to be rotatable about a left-front-wheel-rotation axis P31 extending in parallel with a road surface. The right front wheel 32 is supported by the lower end of a right side member 54 of the linkage mechanism 5 described later to be rotatable about a right-front-wheel-rotation axis P32 extending in parallel with the road surface. The left front wheel 31 and the right front wheel 32 are disposed side by side in the left-right direction.

The term "parallel to the road surface" includes not only a state where the left-front-wheel-rotation axis P31 and the right-front-wheel-rotation axis P32 are completely parallel to the road surface but also a state where the left-front-wheel-rotation axis P31 and the right-front-wheel-rotation axis P32 are tilted with respect to the road surface to such a degree that does not affect a leaning posture of the vehicle body 2 in the left direction or in the right direction. The same holds for description concerning rotation axes below.

The pair of left and right rear wheels 4 includes a left rear wheel 41 and a right rear wheel 42. The left rear wheel 41 is supported on a rear portion of the vehicle body 2 to be rotatable about a left-rear-wheel-rotation axis P41 extending in parallel with the road surface. The right rear wheel 42 is supported on the rear portion of the vehicle body 2 to be rotatable about a right-rear-wheel-rotation axis P42 extending in parallel with the road surface. The left rear wheel 41 and the right rear wheel 42 are disposed side by side in the left-right direction. The pair of left and right rear wheels 4 is fixed to the vehicle body 2 such that the traveling direction is the front-rear direction.

The vehicle body 2 includes a body frame 21 supporting the pair of left and right rear wheels 4 and a linkage-mechanism-support part 22 supporting the linkage mechanism (front-wheel-displacement-linkage mechanism) 5.

The body frame 21 supports the linkage-mechanism-support part 22 and the pair of left and right rear wheels 4. The body frame 21 is constituted by, for example, a pipe-shaped member. The body frame 21 may be constituted by a plate-shaped member.

The linkage-mechanism-support part 22 is located forward of the body frame 21. The linkage-mechanism-support part 22 is a member extending in the top-bottom direction relative to the body frame 21. For example, the linkage-mechanism-support part 22 is constituted by a pipe-shaped member. The linkage-mechanism-support part 22 may be constituted by a plate-shaped member.

The linkage-mechanism-support part 22 is connected to a front end portion of the body frame 21 that does not move relative to the vehicle body 2 by an operation of the linkage mechanism 5. That is, the linkage-mechanism-support part 22 is a member that does not move relative to the vehicle body 2 by an operation of the linkage mechanism 5. The linkage-mechanism-support part 22 is supported by the front end portion of the body frame 21. The linkage-mechanism-support part 22 may be connected to any portion of the body frame 21.

As will be described later, the linkage-mechanism-support part 22 supports an upper cross member 51 of the linkage mechanism 5 such that the upper cross member 51 is swingable about a first-center-swing axis UI, and supports a lower cross member 52 such that the lower cross member 52 is swingable about a second-center-swing axis DI.

A lower end portion of the linkage-mechanism-support part 22 is located below the lower cross member 52. The stopper 7 is connected to a lower end portion of the linkage-mechanism-support part 22.

The operation handle 6 is connected to the body frame 21. The operation handle 6 extends upward from the body frame 21 when the vehicle 1 is seen from the front. Although not specifically shown, an upper portion of the operation handle 6 includes a holder portion to be held by the operator.

The linkage mechanism 5 as a front-wheel-linkage mechanism is supported by the linkage-mechanism-support part 22 located in a front portion of the vehicle body 2 such that the linkage mechanism 5 is swingable in the top-bottom direction when the vehicle 1 is seen from the front. The linkage mechanism 5 is a linkage mechanism of a parallel four-bar linkage (also called a parallelogram linkage) type linkage mechanism. The linkage mechanism 5 is located above the pair of left and right front wheels 3.

The linkage mechanism 5 includes the upper cross member 51 (first swing lever), the lower cross member 52 (second swing lever), the left side member 53 (left-front-wheel support), and the right side member 54 (right-front-wheel support).

The upper cross member 51 extends in the left-right direction. A center portion of the upper cross member 51 in the left-right direction is supported by the linkage-mechanism-support part 22 to be swingable about the first-center-swing axis UI. The first-center-swing axis UI extends in the front-rear direction.

The upper cross member 51 may be located forward of the linkage-mechanism-support part 22, or may be located rearward of the linkage-mechanism-support part 22. The upper cross member 51 may be located at both forward and rearward of the linkage-mechanism-support part 22.

The lower cross member 52 extends in the left-right direction. The lower cross member 52 is located below the upper cross member 51. A center portion of the lower cross member 52 in the left-right direction is supported by the linkage-mechanism-support part 22 to be swingable about the second-center-swing axis DI. The second-center-swing axis DI extends in the front-rear direction.

The lower cross member 52 may be located forward of the linkage-mechanism-support part 22, or may be located rearward of the linkage-mechanism-support part 22. The lower cross member 52 may be located at both forward and rearward of the linkage-mechanism-support part 22.

The left side member 53 is located at the left of the linkage-mechanism-support part 22. The left side member 53 extends in the direction in which the linkage-mechanism-support part 22 extends. That is, the left side member 53 is parallel to the linkage-mechanism-support part 22. In this embodiment, the left side member 53 extends in the top-bottom direction.

The term "parallel" includes not only a case where members are completely parallel to each other but also a case where members are tilted relative to each other to such a degree that does not affect an operation of the linkage mechanism 5.

The right side member 54 is located at the right of the linkage-mechanism-support part 22. The right side member 54 extends in the direction in which the linkage-mechanism-support part 22 extends. That is, the right side member 54 is parallel to the linkage-mechanism-support part 22. In this embodiment, the right side member 54 extends in the top-bottom direction.

With the configuration described above, the left side member 53, the linkage-mechanism-support part 22, and the right side member 54 are parallel.

The left end of the upper cross member 51 is connected to the left side member 53 to be swingable about a first-left-swing axis UL. The first-left-swing axis UL extends in the front-rear direction. The first-left-swing axis UL is parallel to the first-center-swing axis UI.

The left end of the lower cross member 52 is connected to the left side member 53 to be swingable about a second-left-swing axis DL. The second-left-swing axis DL extends in the front-rear direction. The second-left-swing axis DL is parallel to the second-center-swing axis DI.

The right end of the upper cross member 51 is connected to the right side member 54 to be swingable about a first-right-swing axis UR. The first-right-swing axis UR extends in the front-rear direction. The first-right-swing axis UR is parallel to the first-center-swing axis UI.

The right end of the lower cross member 52 is connected to the right side member 54 to be swingable about a second-right-swing axis DR. The second-right-swing axis DR extends in the front-rear direction. The second-right-swing axis DR is parallel to the second-center-swing axis DI.

The first-center-swing axis UI, the first-left-swing axis UL, the first-right-swing axis UR, the second-center-swing axis DI, the second-left-swing axis DL, and the second-right-swing axis DR extend in parallel with each other. The first-center-swing axis UI, the first-left-swing axis UL, the first-right-swing axis UR, the second-center-swing axis DI, the second-left-swing axis DL, and the second-right-swing axis DR are located above the left front wheel 31 and the right front wheel 32.

The upper cross member 51, the lower cross member 52, the left side member 53, and the right side member 54 are supported by the vehicle body 2 such that the upper cross member 51 and the lower cross member 52 are kept in parallel with each other, and the left side member 53 and the right side member 54 are kept in parallel with each other. That is, as described above, the upper cross member 51 and the lower cross member 52 are rotatably supported by the linkage-mechanism-support part 22. The left side member 53 and the right side member 54 move in the top-bottom direction relative to the vehicle body 2.

The shape of the linkage mechanism 5 changes by movement of the left front wheel 31 or the right front wheel 32 in the top-bottom direction. That is, the shape of the linkage mechanism 5 changes by operation of the linkage mechanism 5. As illustrated in FIG. 2, while the linkage mechanism 5 is not operated, the linkage mechanism 5 is rectangular when the vehicle 1 is seen from the front.

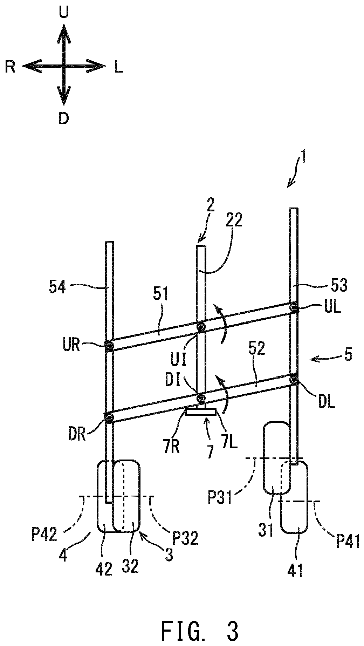

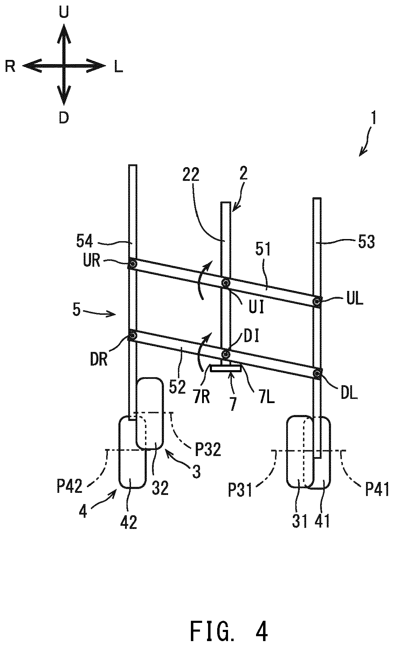

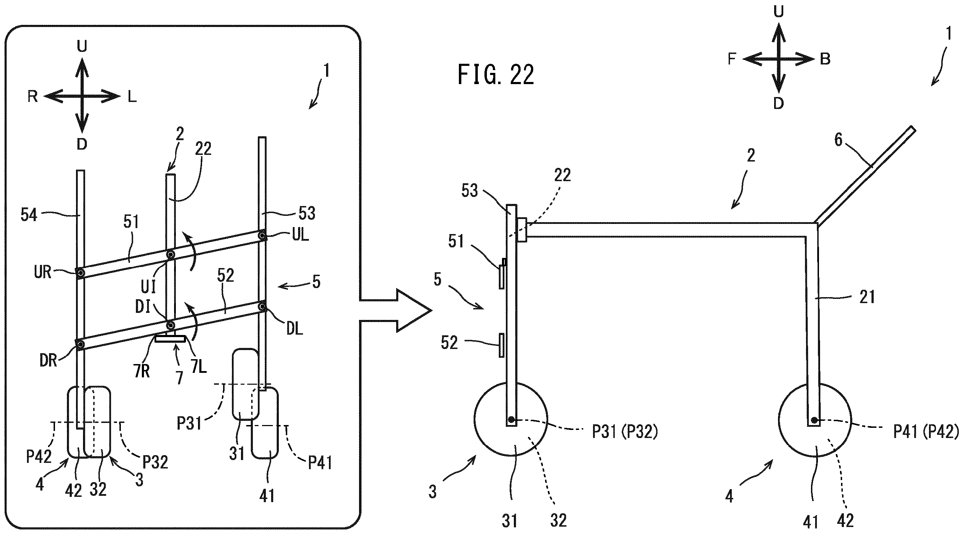

For example, in a case where the road surface has unevenness or the like and one of the left front wheel 31 or the right front wheel 32 is located above or below the other in the top-bottom direction, the linkage mechanism 5 is operated. As illustrated in FIGS. 3 and 4, while the linkage mechanism 5 is operated, the linkage mechanism 5 is a parallelogram when the vehicle 1 is seen from the front. That is, the shape of the linkage mechanism 5 when the vehicle 1 is seen from the front changes depending on an operation of the linkage mechanism 5. FIG. 22 shows FIG. 1 and FIG. 3 side by side.

The deformation of the linkage mechanism 5 is occurred when the upper cross member 51 and the lower cross member 52 rotate about the first-center-swing axis UI and the second-center-swing axis DI (around the first-center-swing axis UI and the second-center-swing axis DI), respectively, and the upper cross member 51, the lower cross member 52, the left side member 53, and the right side member 54 rotate about the first-left-swing axis UL, the first-right-swing axis UR, the second-left-swing axis DL, and the second-right-swing axis DR (around the first-left-swing axis UL, the first-right-swing axis UR, the second-left-swing axis DL, and the second-right-swing axis DR), respectively, with respect to the linkage-mechanism-support part 22, when the vehicle 1 is seen from the front. In this manner, the linkage mechanism 5 is supported by the vehicle body 2 in a state where the left front wheel 31 and the right front wheel 32 are displaceable in the top-bottom direction with respect to the vehicle body 2.

For example, as illustrated in FIG. 3, in a case where the left front wheel 31 rides on a step on the road surface or the like, the left side member 53 supporting the left front wheel 31 moves upward relative to the linkage-mechanism-support part 22. When the left side member 53 moves upward as described above, the upper cross member 51 rotates counterclockwise, when the vehicle 1 is seen from the front, about the first-center-swing axis UI relative to the linkage-mechanism-support part 22. At this time, the lower cross member 52 also rotates counterclockwise, when the vehicle 1 is seen from the front, about the second-center-swing axis DI relative to the linkage-mechanism-support part 22. FIG. 3 shows the rotation directions of the upper cross member 51 and the lower cross member 52 by solid arrows.

As described above, while the upper cross member 51 and the lower cross member 52 rotate, the upper cross member 51 and the lower cross member 52 are kept in parallel, and the left side member 53 and the right side member 54 are also kept in parallel. Accordingly, the shape of the linkage mechanism 5 changes from a rectangle to a parallelogram.

Similarly, for example, as illustrated in FIG. 4, in a case where the right front wheel 32 rides on a step on the road surface or the like, the right side member 54 supporting the right front wheel 32 moves upward relative to the linkage-mechanism-support part 22. When the right side member 54 moves upward as described above, the upper cross member 51 rotates clockwise, when the vehicle 1 is seen from the front, about the first-center-swing axis UI relative to the linkage-mechanism-support part 22. At this time, the lower cross member 52 also rotates clockwise, when the vehicle 1 is seen from the front, about the second-center-swing axis DI relative to the linkage-mechanism-support part 22. FIG. 4 shows the rotation directions of the upper cross member 51 and the lower cross member 52 by solid arrows.

As described above, while the upper cross member 51 and the lower cross member 52 rotate, the upper cross member 51 and the lower cross member 52 are kept in parallel, and the left side member 53 and the right side member 54 are also kept in parallel. Accordingly, the shape of the linkage mechanism 5 changes from a rectangle to a parallelogram.

In a case where one of the left front wheel 31 or the right front wheel 32 rides on a step or the like on the road surface, the linkage mechanism 5 described above is operated so that the front wheel rising on the step or the like is displaced upward relative to the vehicle body 2. Accordingly, leaning of the vehicle body 2 in the left direction or in the right direction is suppressed. In the operation of the linkage mechanism 5 as described above, the relative positions of the left front wheel 31 and the right front wheel 32 in the top-bottom direction change without leaning in the left direction or in the right direction. The left front wheel 31 and the right front wheel 32 are also kept in upright states relative to the vehicle body 2 in the operation of the linkage mechanism 5.

As described above, in a case where the road surface has unevenness or the like and one of the left front wheel 31 or the right front wheel 32 is located above or below the other in the top-bottom direction, the left front wheel 31 or the right front wheel 32 is displaced upward or downward relative to the vehicle body 2 so that the linkage mechanism 5 functions as a front-wheel-displacement-linkage mechanism that suppresses leaning of the vehicle body 2 in the left direction or in the right direction.

A lower end portion of the linkage-mechanism-support part 22 is provided with a stopper 7 that restricts swing of the upper cross member 51 about the first-center-swing axis UI and swing of the lower cross member 52 about the second-center-swing axis DI. The stopper 7 is a member extending in the left-right direction. The stopper 7 is fixed to the lower end portion of the linkage-mechanism-support part 22 such that the stopper projects to the left and the right of the linkage-mechanism-support part 22 when the vehicle 1 is seen from the front.

A right end portion 7R of the stopper 7 is brought into contact with the lower cross member 52 while the lower cross member 52 rotates counterclockwise about the second-center-swing axis DI when the vehicle 1 is seen from the front. Accordingly, counterclockwise rotation of the lower cross member 52 is restricted (see FIG. 3). That is, the lower cross member 52 and the right end portion 7R of the stopper 7 are brought into contact with each other to restrict swing of the lower cross member 52 about the second-center-swing axis DI.

A left end portion 7L of the stopper 7 is brought into contact with the lower cross member 52 while the lower cross member 52 rotates clockwise about the second-center-swing axis DI when the vehicle 1 is seen from the front. Accordingly, clockwise rotation of the lower cross member 52 is restricted (see FIG. 4). That is, the lower cross member 52 and the left end portion 7L of the stopper 7 are brought into contact with each other to restrict swing of the lower cross member 52 about the second-center-swing axis DI.

As described above, the stopper 7 is disposed between the lower cross member 52 that is movable relative to the vehicle body 2 by an operation of the linkage mechanism 5 and the linkage-mechanism-support part 22 that is non-movable relative to the vehicle body 2 by an operation of the linkage mechanism 5. The stopper 7 supported by the non-movable member restricts swing of the movable lower cross member 52 to thereby restrict an operation of the linkage mechanism 5.

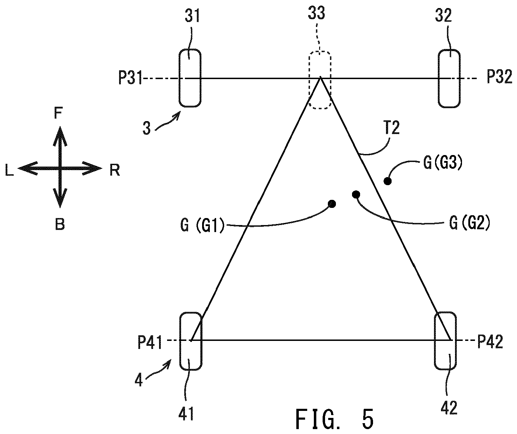

Next, a relationship among the wheels, the position of the barycenter of the vehicle 1, and an operation of the linkage mechanism 5 while the vehicle 1 is stopped on the road surface RS sloped relative to the left-right direction of the vehicle body 2 will be described. FIG. 5 is a plan view schematically illustrating a relationship between wheels and the position of the barycenter of the vehicle 1 according to the first embodiment in a case where the stopper 7 provided in the vehicle 1 does not restrict an operation of the linkage mechanism 5.

While the linkage mechanism 5 does not operate, the vehicle 1 functions as a four-wheeled vehicle including the left front wheel 31, the right front wheel 32, the left rear wheel 41, and the right rear wheel 42.

In the vehicle 1, a condition for allowing the linkage mechanism 5 to be operated is that the road surface RS has unevenness or the like, one of the left front wheel 31 or the right front wheel 32 is located above or below the other in the top-bottom direction (see FIGS. 3 and 4), the vehicle 1 is stopped on the road surface RS sloped in the left-right direction of the vehicle body 2, and the barycenter G of the vehicle 1 is located outside the range of a second triangle T2 described later by a slope of the road surface RS.

While the linkage mechanism 5 is operated and the stopper 7 does not restrict an operation of the linkage mechanism 5, the vehicle 1 has a configuration similar to a configuration including an imaginary front wheel 33, at an intermediate point between a ground point of the left front wheel 31 and a ground point of the right front wheel 32. Thus, in the state where the stopper 7 provided in the vehicle body 2 does not restrict an operation of the linkage mechanism 5, the vehicle 1 can be assumed to be an imaginary-three-wheeled vehicle including the imaginary front wheel 33, the left rear wheel 41, and the right rear wheel 42.

Accordingly, while the stopper 7 does not restrict an operation of the linkage mechanism 5, the ground point of the imaginary front wheel 33, the ground point of the left rear wheel 41, and the ground point of the right rear wheel 42 constitute the second triangle T2 in a plan view in the vehicle 1.

In the example illustrated in FIG. 5, in a case where the road surface RS is flat or is hardly sloped, the barycenter G of the vehicle 1 is at a position indicated by G1. In a case where a slope of the road surface RS is larger than a slope of the road surface RS while the barycenter G of the vehicle 1 is located at the position indicated by G1, the barycenter G of the vehicle 1 is at a position G2 at an outer side of the position G1 in the left-right direction.

In a case where the barycenter G of the vehicle 1 is located within the range of the second triangle T2 described above, the barycenter G is surrounded by the imaginary front wheel 33, the left rear wheel 41, and the right rear wheel 42, in a plan view. Thus, the vehicle 1 uses at least one of the imaginary front wheel 33, the left rear wheel 41, or the right rear wheel 42 as a fulcrum, and a moment by gravity generated with the barycenter G as a power point is supported by the imaginary front wheel 33, the left rear wheel 41, and the right rear wheel 42. That is, in the vehicle 1, the moment does not act such that the vehicle 1 leans. Accordingly, the linkage mechanism 5 is not operated. Consequently, the vehicle 1 is stopped while standing on its own in a direction vertically to the road surface RS.

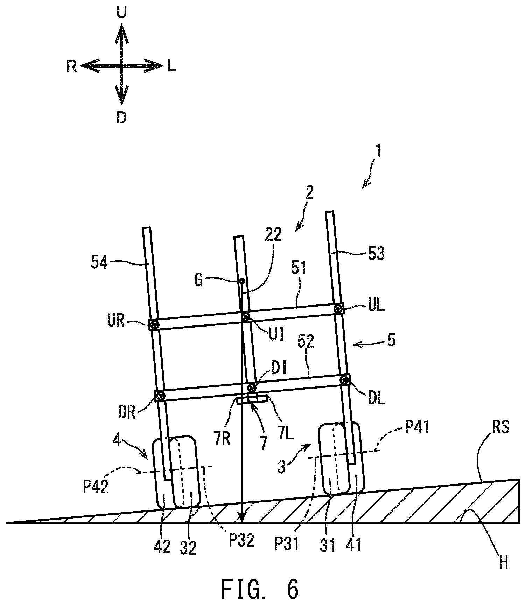

FIG. 6 is a front view in a case where the barycenter G of the vehicle 1 is located within the range of the second triangle T2, such as a case where the barycenter G of the vehicle 1 is located at G2 in FIG. 5. In FIG. 6, the slope of the road surface RS causes the vehicle 1 to be stopped with the left front wheel 31 and the left rear wheel 41 being located above the right front wheel 32 and the right rear wheel 42 in the top-bottom direction.

As illustrated in FIG. 6, in the case where the barycenter G of the vehicle 1 is located within the range of the second triangle T2 in a plan view, the linkage mechanism 5 is not operated.

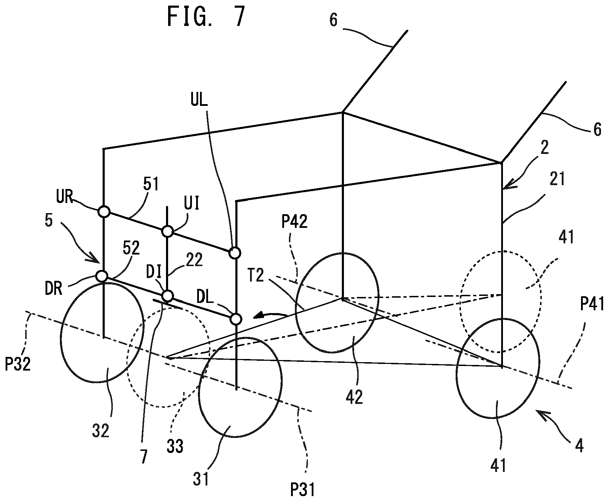

In a case where the barycenter G of the vehicle 1 is located outside the range of the second triangle T2 because of a slope of the road surface RS (see G3 in FIG. 5), the barycenter G is not surrounded by the imaginary front wheel 33, the left rear wheel 41, and the right rear wheel 42. The vehicle 1 uses at least one of the imaginary front wheel 33, the left rear wheel 41, or the right rear wheel 42 as a fulcrum, and a moment by gravity generated with the barycenter G as a power point cannot be supported by the imaginary front wheel 33, the left rear wheel 41, and the right rear wheel 42. That is, in the vehicle 1, the moment acts such that the vehicle 1 leans. Accordingly, the linkage mechanism 5 is operated. Thus, as illustrated in FIG. 7, the vehicle 1 leans about a line connecting the imaginary front wheel 33 to a lower one of the left rear wheel 41 or the right rear wheel 42 in the top-bottom direction. In the example illustrated in FIG. 7, the vehicle 1 leans in a direction indicated by the solid arrow in FIG. 7 about a line connecting the imaginary front wheel 33 to the right rear wheel 42.

The leaning of the vehicle 1 causes an upper one of the left rear wheel 41 or the right rear wheel 42 in the top-bottom direction rises relative to the road surface RS in the vehicle 1. In the example illustrated in FIG. 7, the left rear wheel 41 of the vehicle 1 rises relative to the road surface RS (see broken lines).

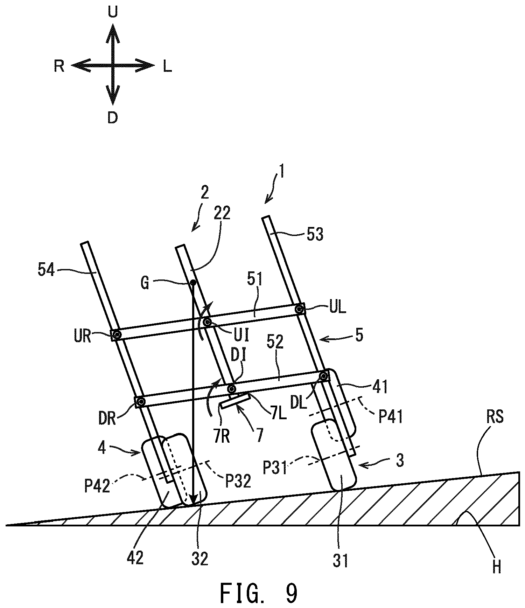

FIG. 9 is a front view schematically illustrating a configuration of a vehicle front portion when the vehicle 1 is seen from the front when the left rear wheel 41 rises relative to the road surface RS. As illustrated in FIG. 9, when the left rear wheel 41 rises relative to the road surface RS, the left front wheel 31 is located below the left rear wheel 41. Accordingly, the linkage mechanism 5 of the vehicle 1 is operated.

As illustrated in FIG. 9, when the linkage mechanism 5 is operated, the upper cross member 51 rotates clockwise, when the vehicle 1 is seen from the front, about the first-center-swing axis UI relative to the linkage-mechanism-support part 22. At this time, the lower cross member 52 also rotates clockwise, when the vehicle 1 is seen from the front, about the second-center-swing axis DI relative to the linkage-mechanism-support-part 22. FIG. 9 shows the rotation directions of the upper cross member 51 and the lower cross member 52 by solid arrows.

When the linkage mechanism 5 is operated, the vehicle 1 further leans. Accordingly, the amount of rising of the left rear wheel 41 relative to the road surface Rs increases, and the upper cross member 51 more greatly swings about the first-center-swing axis UI and the lower cross member 52 more greatly swings about the second-center-swing axis DI. When the vehicle 1 leans, the barycenter G of the vehicle 1 moves away from the second triangle T2.

As described above, in the vehicle 1, operation of the linkage mechanism 5 increases leaning of the vehicle 1. Accordingly, leaning of the vehicle body 2 increases.

In the first embodiment of the present teaching, the stopper 7 restricts an operation of the linkage mechanism 5 in order to suppress an increase in leaning of the vehicle 1 and to suppress leaning of the vehicle body 2.

As illustrated in FIG. 9, when the left rear wheel 41 rises relative to the road surface RS, the linkage mechanism 5 is operated. The left end portion 7L extending in the direction of the left side member 53 of the stopper 7 contacts the lower cross member 52 in a case where the lower cross member 52 rotates clockwise, when the vehicle 1 is seen from the front, about the second-center-swing axis DI relative to the linkage-mechanism-support part 22 and reaches a position at which swing is restricted. Accordingly, swing of the upper cross member 51 about the first-center-swing axis UI and swing of the lower cross member 52 about the second-center-swing axis DI are restricted.

In a case where the stopper 7 restricts an operation of the linkage mechanism 5, the front wheel 3 functions as two wheels of the left front wheel 31 and the right front wheel 32. For example, as illustrated in FIG. 9, in a state where the stopper 7 restricts an operation of the linkage mechanism 5 and the left rear wheel 41 rises, the vehicle 1 functions as a three-wheeled vehicle including the left front wheel 31, the right front wheel 32, and the right rear wheel 42. In this case, the weight of the vehicle 1 is supported by the left front wheel 31, the right front wheel 32, and the right rear wheel 42.

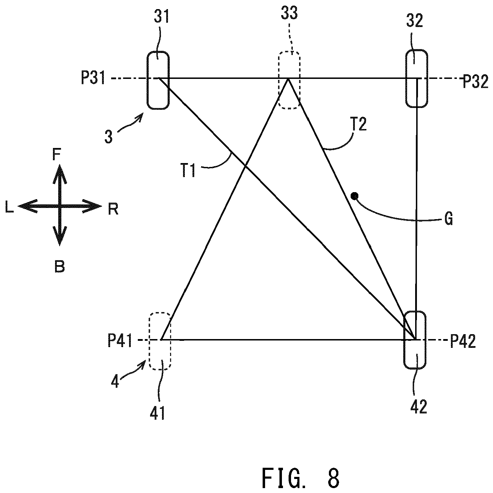

As illustrated in FIG. 8, in the case where the stopper 7 restricts an operation of the linkage mechanism 5, a first triangle T1 is formed by connecting a ground point of the left front wheel 31, a ground point of the right front wheel 32, a ground point of a lower one of the left rear wheel 41 or the right rear wheel 42 in the top-bottom direction, in a plan view. In a case where the barycenter G of the vehicle 1 is located outside the second triangle T2 and inside the first triangle T1, the barycenter G is surrounded by the left front wheel 31, the right front wheel 32, and the right rear wheel 42. Thus, the vehicle 1 uses at least one of the left front wheel 31, the right front wheel 32, or the right rear wheel 42 as a fulcrum, and a moment by gravity generated by the barycenter G (see solid arrow in FIG. 9) as a power point is supported by left front wheel 31, the right front wheel 32, and the right rear wheel 42. Accordingly, in the vehicle 1, leaning of the vehicle 1 restricted by the stopper 7 is maintained.

In this embodiment, as illustrated in FIG. 8, swing of the upper cross member 51 about the first-center-swing axis UI and swing of the lower cross member 52 about the second-center-swing axis DI are restricted by the stopper 7 such that the barycenter G of the vehicle 1 is located within the range of the first triangle T1 in a plan view, and displacement of the left front wheel 31 and the right front wheel 32 in the top-bottom direction is restricted. Accordingly, in the vehicle 1, leaning of the vehicle body 2 is restricted so that the barycenter G of the vehicle 1 can be located within the range of the first triangle T1 in a plan view.

In the examples illustrated in FIGS. 8 and 9, the vehicle 1 is stopped with the left front wheel 31 and the left rear wheel 41 located above the right front wheel 32 and the right rear wheel 42 in the top-bottom direction because of a slope of the road surface RS. On the other hand, in a case where the vehicle 1 is stopped with the right front wheel 32 and the right rear wheel 42 located below the left front wheel 31 and the left rear wheel 41 because of a slope of the road surface RS, when the linkage mechanism 5 is operated, the upper cross member 51 rotates counterclockwise, when the vehicle 1 is seen from the front, about the first-center-swing axis UI relative to the linkage-mechanism-support part 22. At this time, the lower cross member 52 also rotates counterclockwise, when the vehicle 1 is seen from the front, about the second-center-swing axis DI relative to the linkage-mechanism-support part 22.

In this embodiment, the right end portion 7R of the stopper 7 and the left end portion 7L of the stopper 7 are in contact with the lower cross member 52 such that the barycenter G of the vehicle 1 is located within the range of the first triangle T1 in a plan view. The size of a member of the stopper 7 extending in the left-right direction and a position at which the stopper 7 is attached to the linkage-mechanism-support part 22 are previously determined such that when the right end portion 7R of the stopper 7 and the left end portion 7L of the stopper 7 are in contact with the lower cross member 52, the barycenter G of the vehicle 1 is located within the range of the first triangle T1 in a plan view. The size of the member extending in the left-right direction of the stopper 7 and the attachment position of the stopper 7 to the linkage-mechanism-support part 22 may be determined in consideration of a relationship between weight distribution of the vehicle 1, for example, and displacement of the left front wheel 31 and the right front wheel 32 in the top-bottom direction.

As described above, the stopper 7 restricts swing of the upper cross member 51 about the first-center-swing axis UI and swing of the lower cross member 52 about the second-center-swing axis DI such that the barycenter G of the vehicle 1 is located within the range of the first triangle T1 in a plan view with an operation of the linkage mechanism 5 restricted by the stopper 7.

In FIG. 9, the left end portion 7L extending in the direction of the left side member 53 of the stopper 7 contacts the lower cross member 52 in a case where the lower cross member 52 rotates clockwise, when the vehicle 1 is seen from the front, about the second-center-swing axis DI relative to the linkage-mechanism-support part 22 and reaches a position at which swing is restricted. Accordingly, swing of the upper cross member 51 about the first-center-swing axis UI and swing of the lower cross member 52 about the second-center-swing axis DI are restricted. As a result, the barycenter G of the vehicle 1 can be located within the range of the first triangle T1 in a plan view with leaning of the vehicle body 2 restricted.

As a result, the configuration described above can obtain the vehicle capable of maintaining leaning of the vehicle 1 restricted by the stopper 7 to suppress, for example, leaning of the vehicle body 2 and capable of maintaining comfort even when the linkage mechanism 5 is operated.

### [Second Embodiment]

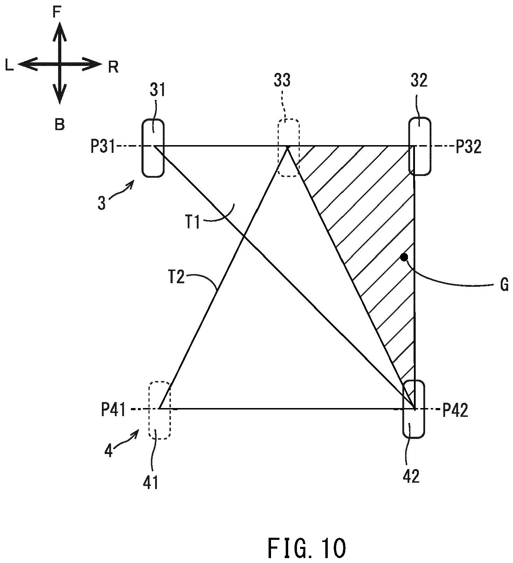

FIG. 10 is a plan view schematically illustrating a relationship among wheels and a position of a barycenter of a vehicle 1 according to a second embodiment in a state where an operation of a linkage mechanism 5 is restricted by a stopper provided in the vehicle 1.

The vehicle 1 according to the second embodiment also includes the stopper 7, and the stopper 7 restricts swing of an upper cross member 51 about a first-center-swing axis UI and swing of a lower cross member 52 about a second-center-swing axis DI. At this time, a right end portion 7R of the stopper 7 and a left end portion 7L of the stopper 7 are in contact with the lower cross member 52 such that the barycenter G of the vehicle 1 is located within the range of a first triangle T1 and outside a second triangle T2 in a plan view. The size of a member of the stopper 7 extending in the left-right direction and a position at which the stopper 7 is attached to the linkage-mechanism-support part 22 are previously determined such that when the right end portion 7R of the stopper 7 and the left end portion 7L of the stopper 7 are in contact with the lower cross member 52, the barycenter G of the vehicle 1 is located within the range of the first triangle T and outside the second triangle T2 in a plan view. The size of the member extending in the left-right direction of the stopper 7 and the attachment position of the stopper 7 to the linkage-mechanism-support part 22 may be determined in consideration of a relationship between weight distribution of the vehicle 1, for example, and displacement of the left front wheel 31 and the right front wheel 32 in the top-bottom direction.

As illustrated in FIG. 10, the size of the member extending in the left-right direction of the stopper 7 is determined such that the barycenter G of the vehicle 1 is located within a hatched region when the right end portion 7R of the stopper 7 or the left end portion 7L of the stopper 7 are in contact with the lower cross member 52. Specifically, the size of the member extending in the left-right direction of the stopper 7 is determined such that the barycenter G of the vehicle 1 is located within the range of the first triangle T1 and within a region between an outline connecting a ground point of a lower one of the left rear wheel 41 or the right rear wheel 42 in the top-bottom direction to an imaginary front wheel 33 in an outline of the second triangle T2 and an outline connecting the ground point of the lower one of the left rear wheel 41 or the right rear wheel 42 in the top-bottom direction to a ground point of a lower one of the left front wheel 31 or the right front wheel 32 in the top-bottom direction in an outline of the first triangle T1, in a plan view. Accordingly, the stopper 7 restricts swing of the upper cross member 51 about the first-center-swing axis UI and swing of the lower cross member 52 about the second-center-swing axis DI such that the barycenter G of the vehicle 1 is located within the hatched region.

As a result, the configuration of the second embodiment can suppress leaning of the vehicle body 2, for example.

In addition, the stopper 7 is determined such that the barycenter of the vehicle 1 is located within the range of the first triangle T1 in a plan view and is located at a position closer to the outline of the first triangle T1 than the outline of the second triangle T2 in the left-right direction. Specifically, the size of the member extending in the left-right direction of the stopper 7 is determined such that the barycenter G of the vehicle 1 is located within the range of the first triangle T1 in a plan view and is located at a position closer to the outline connecting the ground point of the lower one of the left rear wheel 41 or the right rear wheel 42 in the top-bottom direction to the ground point of the lower one of the left front wheel 31 or the right front wheel 32 in the top-bottom direction in the outline of the first triangle T1 than the outline connecting the ground point of the lower one of the left rear wheel 41 or the right rear wheel 42 in the top-bottom direction to the imaginary front wheel 33 in the outline of the second triangle T2 in the left-right direction. Accordingly, the stopper 7 restricts swing of the upper cross member 51 about the first-center-swing axis UI and swing of the lower cross member 52 about the second-center-swing axis DI such that the barycenter of the vehicle 1 is located within the range of the first triangle T1 in a plan view and at a position closer to the outline of first triangle T1 than the outline of the second triangle T2 in the left-right direction.

With this configuration, the barycenter G of the vehicle 1 is located within the range of the first triangle T1 and at the position closer to the outline of the first triangle T1 than the outline of the second triangle T2 in the left-right direction with an operation of the linkage mechanism 5 restricted by the stopper 7. As a result, an influence on an operating range of the linkage mechanism 5 capable of handling upward and downward movement of the left front wheel 31 or the right front wheel 32 is reduced, and leaning of the vehicle body 2, for example, can be suppressed.

### [Third Embodiment]

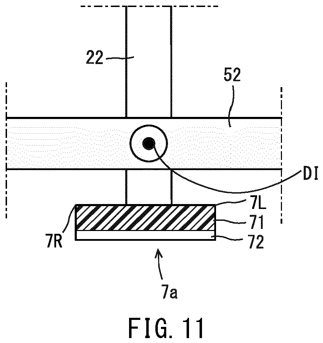

In a third embodiment, as illustrated in FIGS. 11 through 14, a stopper 7a or 7b includes at least one or a spring element or a buffer element that applies a resistance for reducing energy exerted on a vehicle body 2.

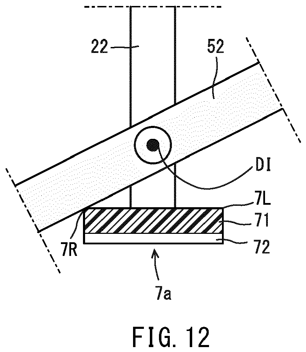

As illustrated in FIGS. 11 and 12, the stopper 7a includes an elastic member 71 as a buffer element. The elastic member 71 is disposed on a plate-shaped base 72 fixed to a linkage-mechanism-support part 22 to face a lower cross member 52.

The elastic member 71 of the stopper 7a is brought into contact with the lower cross member 52 when the stopper 7a restricts swing of the upper cross member 51 about the first-center-swing axis UI and swing of the lower cross member 52 about the second-center-swing axis DI. The stopper 7a is brought into contact with the lower cross member 52 with the elastic member 71 being deformed so that the stopper 7a restricts swing of the upper cross member 51 about the first-center-swing axis UI and swing of the lower cross member 52 about the second-center-swing axis DI.

In the stopper 7a, while the elastic member 71 is in contact with the lower cross member 52 while being deformed, that is, while the upper cross member 51 swings about the first-center-swing axis UI and the lower cross member 52 swings about the second-center-swing axis DI, a resistance for reducing energy exerted on the vehicle body 2 is applied to the upper cross member 51 and the lower cross member 52 by the deformation of the elastic member 71.

As illustrated in FIG. 12, with leaning of the vehicle 1, the stopper 7a restricts swing of the upper cross member 51 about the first-center-swing axis UI and swing of the lower cross member 52 about the second-center-swing axis DI. At this time, the stopper 7a is brought into contact with the lower cross member 52 with the elastic member 71 interposed therebetween. In the manner described above, the stopper 7a restricts swing of the upper cross member 51 about the first-center-swing axis UI and swing of the lower cross member 52 about the second-center-swing axis DI in the state where a resistance by deformation of the elastic member 71 is applied to the lower cross member 52.

Accordingly, in the vehicle body 2, deformation of the elastic member 71 can reduce energy exerted on the vehicle body 2 due to restriction by the stopper 7a. As a result, in this embodiment, restriction of operation of the linkage mechanism 5 by the stopper 7a can be performed with a small impact so that comfort can be enhanced.

The elastic member 71 is provided in the stopper 7 in the embodiment illustrated in FIGS. 11 and 12, but may be provided in the lower cross member 52.

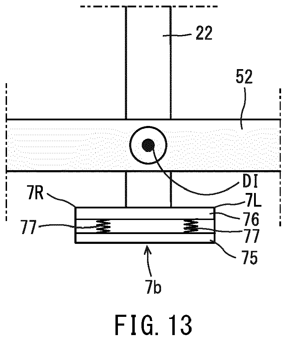

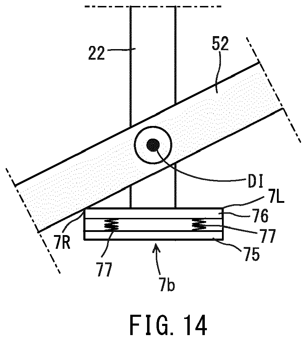

In another example of the third embodiment illustrated in FIGS. 13 and 14, the stopper 7b includes a spring member 77. The spring member 77 is disposed between a plate-shaped base 75 fixed to the linkage-mechanism-support part 22 and a contact portion 76 to contact the lower cross member 52.

The contact portion 76 of the stopper 7b is brought into contact with the lower cross member 52 when the stopper 7b restricts swing of the upper cross member 51 about the first-center-swing axis UI and swing of the lower cross member 52 about the second-center-swing axis DI. At this time, the spring member 77 of the stopper 7b contracts so that the contact portion 76 is brought into contact with the lower cross member 52, and swing of the upper cross member 51 about the first-center-swing axis UI and swing of the lower cross member 52 about the second-center-swing axis DI are restricted.

While the spring member 77 is in contact with the lower cross member 52 while being deformed, that is, while the upper cross member 51 swings about the first-center-swing axis UI and the lower cross member 52 swings about the second-center-swing axis DI, the contact portion 76 of the stopper 7b applies a resistance for reducing energy exerted on the vehicle body 2 to the upper cross member 51 and the lower cross member 52 by the deformation of the spring member 77.

As illustrated in FIG. 14, when displacement of the left front wheel 31 and the right front wheel 32 in the top-bottom direction relative to the vehicle body 2 exceeds a given value by leaning of the vehicle 1, the stopper 7b restricts swing of the upper cross member 51 about the first-center-swing axis UI and swing of the lower cross member 52 about the second-center-swing axis DI. At this time, the contact portion 76 of the stopper 7 is brought into contact with the lower cross member 52. Accordingly, the spring member 77 contracts. In this manner, in the state where the resistance of the spring member 77 is applied to the lower cross member 52, the stopper 7 restricts swing of the upper cross member 51 about the first-center-swing axis UI and swing of the lower cross member 52 about the second-center-swing axis DI.

Accordingly, in the vehicle body 2, the resistance of the spring member 77 can reduce energy exerted on the vehicle body 2 due to restriction by the stopper 7b. As a result, in this embodiment, restriction of operation of the linkage mechanism 5 by the stopper 7b can be performed with a small impact so that comfort can be enhanced.

The spring member 77 is provided in the stopper 7b in the embodiment illustrated in FIGS. 13 and 14, but may be provided in the lower cross member 52.

### [Fourth Embodiment]

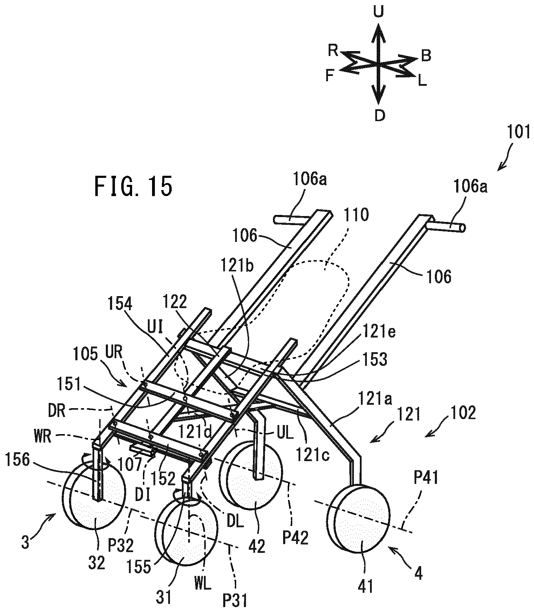

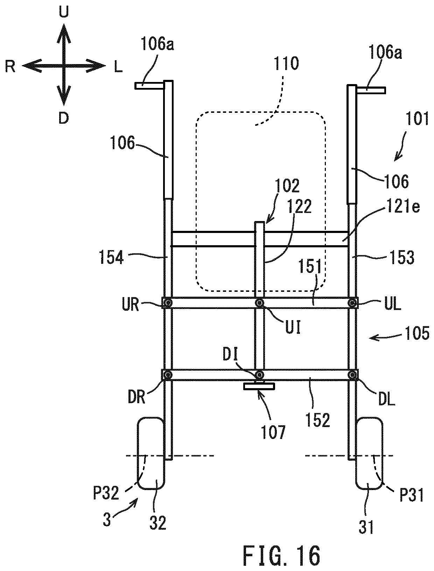

FIG. 15 is a perspective view illustrating a schematic configuration of a vehicle 101 according to a fourth embodiment. FIG. 16 is a front view schematically illustrating a configuration of a vehicle front portion when the vehicle according to the fourth embodiment is seen from the front. The vehicle 101 is different from the vehicle 1 of the first embodiment in that each of a left side member 153 and a right side member 154 of a linkage mechanism 105 extends in the top-bottom direction and in the front-rear direction such that an upper portion is located rearward of a lower portion. In the following description, components similar to those of the first embodiment are denoted by the same reference characters and will not be described again, and components different from those of the first embodiment will be described.

The vehicle 101 includes a vehicle body 102, a pair of left and right front wheels 3, a pair of left and right rear wheels 4, the linkage mechanism 105, an operation handles 106, a stopper 107, and a seat 110.

The seat 110 is supported by the vehicle body 102. The seat 110 is, for example, a bucket seat on which an infant or the like can be seated. The vehicle 101 is, for example, a baby carriage for carrying an infant or the like. The seat 110 may be of other types other than a bucket type.

The vehicle body 102 includes a body frame 121 supporting the pair of left and right rear wheels 4, and a linkage-mechanism-support part 122 supporting the linkage mechanism 105.

The body frame 121 supports the linkage-mechanism-support part 122 and the pair of left and right rear wheels 4. The body frame 121 is constituted by, for example, a pipe-shaped member.

The body frame 121 includes a left main frame 121a, a right main frame 121b, a lower connecting frame 121c, and an upper connecting frame 121e.

The left main frame 121a is a member extending in the top-bottom direction when the vehicle 101 is seen from the front. A lower end portion of the left main frame 121a supports the left rear wheel 41 such that the left rear wheel 41 is rotatable about the left-rear-wheel-rotation axis P41. The right main frame 121b is a member extending in the top-bottom direction when the vehicle 101 is seen from the front. A lower end portion of the right main frame 121b supports the right rear wheel 42 such that the right rear wheel 42 is rotatable about the right rear wheel rotation axis P42.

Operation handles 106 are individually connected to the left main frame 121a and the right main frame 121b. Each of the operation handles 106 extends upward and rearward from a corresponding one of the left main frame 121a or the right main frame 121b such that the operation handles 106 gradually elevate toward the rear. In FIG. 15, character 106a denotes holder portions.

Each of the lower connecting frame 121c and the upper connecting frame 121e is a member extending in the left-right direction. Each of the lower connecting frame 121c and the upper connecting frame 121e connects the left main frame 121a and the right main frame 121b to each other in the left-right direction. The upper connecting frame 121e is located above the lower connecting frame 121c. The lower connecting frame 121c is connected to a lower portion of the linkage-mechanism-support part 122 by a reinforcing frame 121d. The upper connecting frame 121e supports an upper end portion of the linkage-mechanism-support part 122.

The linkage-mechanism-support part 122 is located forward of the body frame 121. The linkage-mechanism-support part 122 is a member extending in the top-bottom direction. The upper end portion of the linkage-mechanism-support part 122 is connected to a center portion of the upper connecting frame 121e in the left-right direction. In this embodiment, the linkage-mechanism-support part 122 is constituted by, for example, a pipe-shaped member. The linkage-mechanism-support part 122 may be constituted by a plate-shaped member.

As will be described later, the linkage-mechanism-support part 122 supports an upper cross member 151 of the linkage mechanism 5 such that the upper cross member 151 is swingable about a first-center-swing axis UI, and supports a lower cross member 152 such that the lower cross member 152 is swingable about a second-center-swing axis DI. The upper connecting frame 121e supports the left side member 153 and the right side member 154 such that the left side member 153 and the right side member 154 are movable upward and downward.

A lower end portion of the linkage-mechanism-support part 122 is located below the lower cross member 152. The lower end portion of the linkage-mechanism-support part 122 is provided with the stopper 107.

The linkage mechanism 105 (front-wheel-displacement-linkage mechanism) includes the upper cross member 151 (first swing lever), the lower cross member 152 (second swing lever), the left side member 153 (left-front-wheel support), and the right side member 154 (right-front-wheel support). As in the first embodiment, the linkage mechanism 105 is a linkage mechanism of a parallel four-bar linkage (also called parallelogram linkage) type linkage mechanism. The linkage mechanism 105 is located above the pair of left and right front wheels 3. In this embodiment, a left-front-wheel-support part 155 is connected to the lower end portion of the left side member 153. A right-front-wheel-support part 156 is connected to the lower end portion of the right side member 154.

The linkage mechanism 105 has the same configuration as that of the linkage mechanism 5 of the first embodiment except for arrangement. Thus, the configuration of the linkage mechanism 105 will not be described in detail.

The linkage-mechanism-support part 122 extends in the top-bottom direction and in the front-rear direction such that an upper portion of the linkage-mechanism-support part 122 is located rearward of a lower portion of the linkage-mechanism-support part 122. Each of the left side member 153 and the right side member 154 also extends in the top-bottom direction and in the front-rear direction such that an upper portion of each of the left side member 153 and the right side member 154 is located rearward of a lower portion of each of the left side member 153 and the right side member 154. That is, in a manner similar to the first embodiment, the left side member 153, the right side member 154, and the linkage-mechanism-support part 122 are also parallel in the fourth embodiment.

The left end of the upper cross member 151 is connected to the left side member 153 to be swingable about a first-left-swing axis UL. The first-center-swing axis UL extends in the front-rear direction and in the top-bottom direction to gradually elevate from the rear toward the front. The first-left-swing axis UL is parallel to the first-center-swing axis UI.

The left end of the lower cross member 152 is connected to the left side member 153 to be swingable to a second-left-swing axis DL. The second-left-swing axis DL extends in the front-rear direction and in the top-bottom direction to gradually elevate from the rear toward the front. The second-left-swing axis DL is parallel to the second-center-swing axis DI.

The right end of the upper cross member 151 is connected to the right side member 154 to be swingable about a first-right-swing axis UR. The first-right-swing axis UR extends in the front-rear direction and in the top-bottom direction to gradually elevate from the rear toward the front. The first-right-swing axis UR is parallel to the first-center-swing axis UI.

The right end of the lower cross member 152 is connected to the right side member 154 to be swingable about a second-right-swing axis DR. The second-right-swing axis DR extends in the front-rear direction and in the top-bottom direction to gradually elevate from the rear toward the front. The second-right-swing axis DR is parallel to the second-center-swing axis DI.

In a manner similar to the first embodiment, the first-center-swing axis UI, the first-left-swing axis UL, the first-right-swing axis UR, the second-center-swing axis DI, the second-left-swing axis DL, and the second-right-swing axis DR extend in parallel with each other. The first-center-swing axis UI, the first-left-swing axis UL, the first-right-swing axis UR, the second-center-swing axis DI, the second-left-swing axis DL, and the second-right-swing axis DR are located above the left front wheel 31 and the right front wheel 32.

In a manner similar to the first embodiment, the upper cross member 151, the lower cross member 152, the left side member 153, and the right side member 154 are supported by the vehicle body 102 such that the upper cross member 151 and the lower cross member 152 are kept in parallel with each other, and the left side member 153 and the right side member 154 are kept in parallel with each other. That is, as described above, the upper cross member 151 and the lower cross member 152 are rotatably supported by the linkage-mechanism-support part 122. The left side member 153 and the right side member 154 move in the top-bottom direction relative to the vehicle body 102, when the vehicle 101 is seen from the front.

The operation of the linkage mechanism 105 are similar to the operation of the linkage mechanism 5 of the first embodiment. Thus, the operation of the linkage mechanism 105 will not be described in detail.

The left front wheel 31 is supported by the left-front-wheel-supporting part 155 connected to a lower end portion of the left side member 153 of the linkage mechanism 105 such that the left front wheel 31 is rotatable about the left-front-wheel-rotation axis P31 extending in parallel with a road surface RS. The right front wheel 32 is supported by the right-front-wheel-supporting part 156 connected to a lower end portion of the right side member 154 of the linkage mechanism 105, such that the right front wheel 32 is rotatable about the right-front-wheel-rotation axis P32 extending in parallel with a road surface RS.

The left-front-wheel-supporting part 155 is supported by the left side member 153 to be rotatable about a left rotation axis WL extending in the top-bottom direction. Accordingly, the left front wheel 31 is rotatable about the left rotation axis WL. That is, the left front wheel 31 is a caster wheel. A rotation angle range of the left front wheel 31 may be 360 degrees or may be a range smaller than 360 degrees.

The right-front-wheel-supporting part 156 is supported by the right side member 154 to be rotatable about a right rotation axis WR extending in the top-bottom direction. Accordingly, the right front wheel 32 is rotatable about the right rotation axis WR. That is, the right front wheel 32 is a caster wheel. A rotation angle range of the right front wheel 32 may be 360 degrees or may be a range smaller than 360 degrees.

The left-front-wheel-supporting part 155 and the right-front-wheel-supporting part 156 may be connected to each other. That is, the left-front-wheel-supporting part 155 and the right-front-wheel-supporting part 156 may rotate as one unit.

The stopper 107 has a configuration similar to that of the stopper 7 according to the first embodiment. Thus, the configuration of the stopper 107 will not be described in detail.

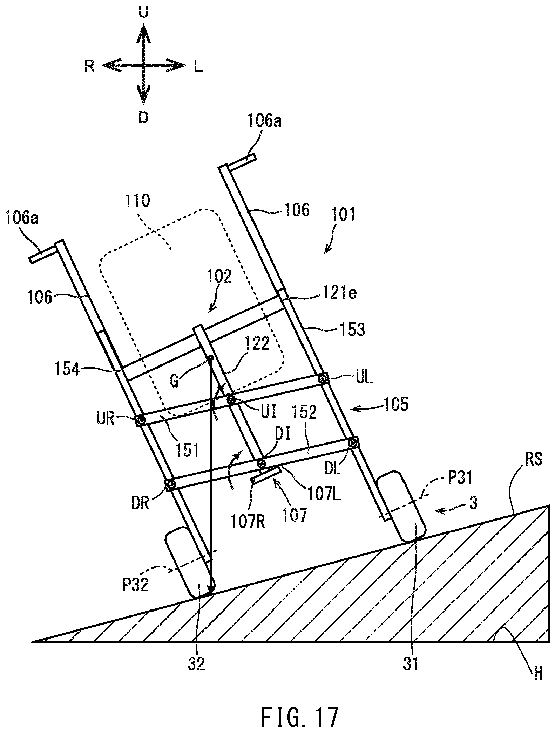

FIG. 17 is a view illustrating a state where a linkage mechanism is operated by a slope of a road surface RS. The linkage mechanism 105 is operated while the vehicle is stopped on the road surface RS sloped in the left-right direction of the vehicle body 102 in some cases. In a case where a barycenter G of the vehicle 101 is located outside the range of the second triangle T2 described above (see G3 in FIG. 5) because of the slope of the road surface RS, the vehicle 101 leans about a line connecting an imaginary front wheel 33 to a lower one of the left rear wheel 41 or the right rear wheel 42 in the top-bottom direction (the right rear wheel 42 in FIG. 7) (see FIG. 7).

The leaning of the vehicle 101 causes an upper one of the left rear wheel 41 or the right rear wheel 42 in the top-bottom direction to rise relative to the road surface RS in the vehicle 101. When the left rear wheel 41 or the right rear wheel 42 rises relative to the road surface RS, the linkage mechanism 105 of the vehicle 101 is operated.

For example, swing of the upper cross member 151 about the first-center-swing axis UI and swing of the lower cross member 152 about the second-center-swing axis DI are restricted by the stopper 107 in accordance with leaning of the vehicle 101 so that displacement of the left front wheel 31 and the right front wheel 32 in the top-bottom direction is suppressed.

This can suppress leaning of the vehicle body 2, for example.

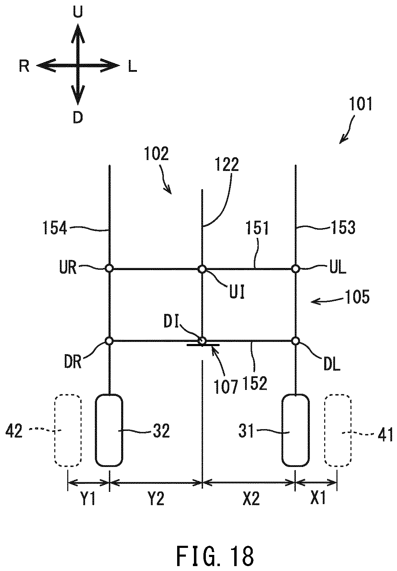

As illustrated in FIG. 18, in this embodiment, the left front wheel 31 is located closer to the left rear wheel 41 than the first-center-swing axis UI and the second-center-swing axis DI of the linkage mechanism 105, when the vehicle 101 is seen from the front. That is, when the vehicle 101 is seen from the front, a distance X1 in the left-right direction between the center of the left front wheel 31 in the left-right direction and the center of the left rear wheel 41 in the left-right direction is smaller than a distance X2 in the left-right direction between the center of the left front wheel 31 in the left-right direction and the first-center-swing axis UI and the second-center-swing axis DI.

In this embodiment, when the vehicle 101 is seen from the front, the distance X2 in the left-right direction between the center of the left front wheel 31 in the left-right direction and the first-center-swing axis UI and the second-center-swing axis DI is smaller than a distance X1 + X2 in the left-right direction between the center of the left rear wheel 41 in the left-right direction and the first-center-swing axis UI and the second-center-swing axis DI.

When the vehicle 101 is seen from the front, the distance X1 in the left-right direction between the center of the left front wheel 31 in the left-right direction and the center of the left rear wheel 41 in the left-right direction may be equal to the distance X2 in the left-right direction between the center of the left front wheel 31 in the left-right direction and the first-center-swing axis UI and the second-center-swing axis DI.

Similarly, when the vehicle 101 is seen from the front, the right front wheel 32 is located closer to the right rear wheel 42 than the first-center-swing axis UI and the second-center-swing axis DI. That is, when the vehicle 101 is seen from the front, a distance Y1 in the left-right direction between the center of the right front wheel 32 in the left-right direction and the center of the right rear wheel 42 in the left-right direction is smaller than a distance Y2 in the left-right direction between the center of the right front wheel 32 in the left-right direction and the first-center-swing axis UI and the second-center-swing axis DI.

In this embodiment, when the vehicle 101 is seen from the front, the distance Y2 in the left-right direction between the center of the right front wheel 32 in the left-right direction and the first-center-swing axis UI and the second-center-swing axis DI is smaller than a distance Y1 + Y2 in the left-right direction between the center of the right rear wheel 42 in the left-right direction and the first-center-swing axis UI and the second-center-swing axis DI.

When the vehicle 101 is seen from the front, the distance Y1 in the left-right direction between the center of the right front wheel 32 in the left-right direction and the center of the right rear wheel 42 in the left-right direction may be equal to the distance Y2 in the left-right direction between the center of the right front wheel 32 in the left-right direction and the first-center-swing axis UI and the second-center-swing axis DI.

That is, the linkage mechanism 105 is configured such that in the left-right direction of the vehicle 101, the left front wheel 31 is located closer to the left rear wheel 41 than the first-center-swing axis UI and the second-center-swing axis DI, and the right front wheel 32 is located closer to the right rear wheel 42 than the first-center-swing axis UI and the second-center-swing axis DI, when the vehicle 101 is seen from the front. Thus, when the vehicle 101 is seen from the front, in the left-right direction of the vehicle 101, the left front wheel 31 can be disposed closer to the left rear wheel 41, and the right front wheel 32 can be disposed closer to the right rear wheel 42.

When the left front wheel 31 or the right front wheel 32 of the vehicle 1 rides on a step or the like, an operation of the linkage mechanism 105 causes the distance between the left front wheel 31 and the right front wheel 32 in the left-right direction to change. On the other hand, the left front wheel 31 and the right front wheel 32 are disposed as described above so that it is possible to suppress a change of the distance between the left front wheel 31 and the right front wheel 32 in the left-right direction caused by an operation of the linkage mechanism 105 when the left front wheel 31 or the right front wheel 32 rides on a step or the like at the same height, as compared to a case where the left front wheel 31 is close to the first-center-swing axis UI and the second-center-swing axis DI and a case where the right front wheel 32 is close to the first-center-swing axis UI and the second-center-swing axis DI.

With the configuration of this embodiment as described above, a vehicle resistant to rolls in the left-right direction can be obtained, as compared to a case where the left front wheel 31 is close to the first-center-swing axis UI and the second-center-swing axis DI and a case where the right front wheel 32 is close to the first-center-swing axis UI and the second-center-swing axis DI, when the vehicle 101 is seen from the front.

### [Fifth Embodiment]

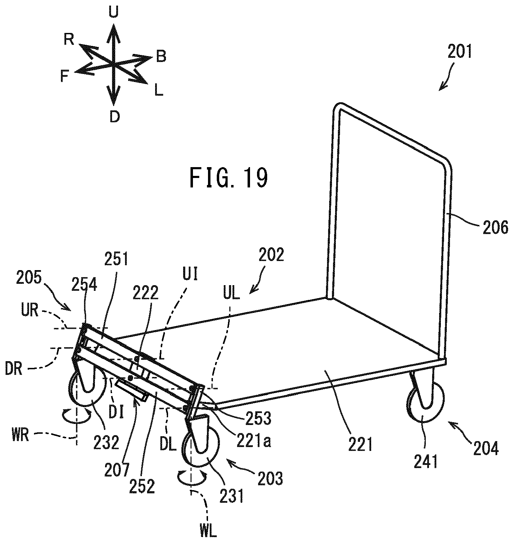

FIG. 19 is a view illustrating a schematic configuration of a vehicle 201 according to a fifth embodiment. The vehicle 201 is different from the vehicle 101 of the fourth embodiment in that a pair of left and right front wheels 203 is provided with a linkage mechanism 205 interposed therebetween in a front portion of a carriage 221. In the following description, components similar to those of the first and fourth embodiments are denoted by the same reference characters and will not be described again, and components different from those of the first and fourth embodiments will be described.

As illustrated in FIG. 19, the vehicle 201 includes a vehicle body 202, the pair of left and right front wheels 203, a pair of left and right rear wheels 204, the linkage mechanism 205, an operation handle 206, and a stopper 207. The vehicle 201 is a dolly capable of conveying baggage or the like placed on the carriage 221 of the vehicle body 202 described later.

The vehicle body 202 includes the carriage 221 on which baggage or the like can be placed, and a linkage-mechanism-support part 222 supporting the linkage mechanism 205.

The carriage 221 is a plate-shaped member having a rectangular shape in a plan view. The pair of left and right rear wheels 204 is disposed under a rear portion of the carriage 221. The pair of left and right rear wheels 204 includes a left rear wheel 241 and a right rear wheel 242. The left rear wheel 241 is disposed at the left under the rear portion of the carriage 221. The right rear wheel 242 is disposed at the right under the rear portion of the carriage 221. The carriage 221 constitutes a body frame of the vehicle body 202.

The operation handle 206 is connected to an upper portion of the rear portion of the carriage 221 to extend upward. The operation handle 206 has a U shape when the vehicle 201 is seen from the front. The operation handle 206 is connected to the upper portion of the rear portion of the carriage 221 such that a bent portion of the operation handle 206 is located at the top.

The linkage-mechanism-support part 222 supporting the pair of left and right front wheels 203 is provided on a front portion of the carriage 221. Notches 221a are provided in the left and right ends of a front portion of the carriage 221 to prevent interference of the front portion with the pair of left and right front wheels 203 supported by the linkage-mechanism-support part 222 when the left and right front wheels 203 move upward or downward as described later.

The linkage-mechanism-support part 222 extends upward from the top of a front portion of the carriage 221 when the vehicle 201 is seen from the front. Specifically, the linkage-mechanism-support part 222 extends upward and rearward from a front portion of the carriage 221 such that an upper portion of the linkage-mechanism-support part 222 is located rearward of a lower portion of the linkage-mechanism-support part 222.

The linkage-mechanism-support part 222 is fixed to a center of the carriage 221 in the left-right direction. The linkage-mechanism-support part 222 supports an upper cross member 251 of the linkage mechanism 205 described later such that the upper cross member 251 is swingable about a first-center-swing axis UI, and supports a lower cross member 252 described later such that the lower cross member 252 is swingable about a second-center-swing axis DI. A lower end portion of the linkage-mechanism-support part 222 is located below the lower cross member 252. The lower end portion of the linkage-mechanism-support part 222 is provided with the stopper 207.

The linkage mechanism 205 (front-wheel-displacement-linkage mechanism) includes the upper cross member 251 (first swing lever), the lower cross member 252 (second swing lever), a left side member 253 (left-front-wheel support), and a right side member 254 (right-front-wheel support). As in the first and second embodiments, the linkage mechanism 205 is a linkage mechanism of a parallel four-bar linkage (also called parallelogram linkage) type linkage mechanism. The linkage mechanism 205 is located above the pair of left and right front wheels 203.

The linkage mechanism 205 has the same configuration as that of the linkage mechanism 5 of the first embodiment except for arrangement. Thus, the configuration of the linkage mechanism 205 will not be described in detail.

Each of the left side member 253 and the right side member 254 also extends in the top-bottom direction and in the front-rear direction such that an upper portion of each of the left side member 253 and the right side member 254 is located rearward of a lower portion of each of the left side member 253 and the right side member 254. Thus, in a manner similar to the first and second embodiments, the left side member 253, the right side member 254, and the linkage-mechanism-support part 222 are parallel in the fifth embodiment.

The upper cross member 251 extends in the left-right direction. A center portion of the upper cross member 251 in the left-right direction is supported by the linkage-mechanism-support part 222 to be swingable about the first-center-swing axis UI without a biasing member for returning to a neutral position. The first-center-swing axis UI extends in the front-rear direction and in the top-bottom direction to gradually elevate from the rear toward the front.

The lower cross member 252 extends in the left-right direction. A center portion of the lower cross member 252 in the left-right direction is supported by the linkage-mechanism-support part 222 to be swingable about the second-center-swing axis DI without a biasing member for returning to a neutral position. The second-center-swing axis DI extends in the front-rear direction and in the top-bottom direction to gradually elevate from the rear toward the front.

The left end of the upper cross member 251 is connected to the left side member 253 to be swingable about a first-left-swing axis UL. The first-center-swing axis UL extends in the front-rear direction and in the top-bottom direction to gradually elevate from the rear toward the front. The first-left-swing axis UL is parallel to the first-center-swing axis UI.

The left end of the lower cross member 252 is connected to the left side member 253 to be swingable to a second-left-swing axis DL. The second-left-swing axis DL extends in the front-rear direction and in the top-bottom direction to gradually elevate from the rear toward the front. The second-left-swing axis DL is parallel to the second-center-swing axis DI.

The right end of the upper cross member 251 is connected to the right side member 254 to be swingable about a first-right-swing axis UR. The first-right-swing axis UR extends in the front-rear direction and in the top-bottom direction to gradually elevate from the rear toward the front. The first-right-swing axis UR is parallel to the first-center-swing axis UI.

The right end of the lower cross member 252 is connected to the right side member 254 to be swingable about a second-right-swing axis DR. The second-right-swing axis DR extends in the front-rear direction and in the top-bottom direction to gradually elevate from the rear toward the front. The second-right-swing axis DR is parallel to the second-center-swing axis DI.

In the fifth embodiment, the lower end portion of the linkage-mechanism-support part 222 is located below the lower cross member 252. The lower end portion of the linkage-mechanism-support part 222 is provided with the stopper 207 that restricts swing of the upper cross member 251 about the first-center-swing axis UI and swing of the lower cross member 252 about the second-center-swing axis DI.

In a manner similar to the first embodiment, the first-center-swing axis UI, the first-left-swing axis UL, the first-right-swing axis UR, the second-center-swing axis DI, the second-left-swing axis DL, and the second-right-swing axis DR extend in parallel. The first-center-swing axis UI, the first-left-swing axis UL, the first-right-swing axis UR, the second-center-swing axis DI, the second-left-swing axis DL, and the second-right-swing axis DR are located above the left front wheel 231 and the right front wheel 232.

In a manner similar to the first embodiment, the upper cross member 251, the lower cross member 252, the left side member 253, and the right side member 254 are supported by the vehicle body 202 such that the upper cross member 251 and the lower cross member 252 are kept in parallel with each other, and the left side member 253 and the right side member 254 are kept in parallel with each other. That is, as described above, the upper cross member 251 and the lower cross member 252 are rotatably supported by the linkage-mechanism-support part 222. The left side member 253 and the right side member 254 move in the top-bottom direction relative to the vehicle body 202, when the vehicle 201 is seen from the front.

The operation of the linkage mechanism 205 are similar to the operation of the linkage mechanism 5 of the first embodiment and the linkage mechanism 105 of the second embodiment. Thus, the operation of the linkage mechanism 205 will not be described in detail.

The pair of left and right front wheels 203 includes a left front wheel 231 and a right front wheel 232. The left front wheel 231 is supported by the left side member 253 of the linkage mechanism 205 to be rotatable about a left rotation axis WL extending in the top-bottom direction. The left front wheel 231 is a caster wheel. The right front wheel 232 is supported by the right side member 254 of the linkage mechanism 205 to be rotatable about a right rotation axis WR extending in the top-bottom direction. The right front wheel 232 is a caster wheel.

The stopper 207 has a configuration similar to that of the stopper 7 according to the first embodiment. Thus, the configuration of the stopper 207 will not be described in detail.

As described above, in this embodiment, in the vehicle 201 having a configuration of a carriage, the linkage mechanism 205 also is operated while the vehicle is stopped on the road surface RS sloped in the left-right direction of the vehicle body 202 in some cases. When a barycenter G of the vehicle 201 is located outside the range of the second triangle T2 described above (see G3 in FIG. 5) because of the slope of the road surface RS, the vehicle 201 leans about a line connecting an imaginary front wheel 33 to a lower one of the left rear wheel 41 or the right rear wheel 42 in the top-bottom direction (the right rear wheel 42 in FIG. 7) (see FIG. 7).

The leaning of the vehicle 201 causes an upper one of the left rear wheel 241 or the right rear wheel 242 in the top-bottom direction to rise relative to the road surface RS in the vehicle 201. When the left rear wheel 241 or the right rear wheel 242 rises relative to the road surface RS, the linkage mechanism 205 of the vehicle 201 is operated.

For example, swing of the upper cross member 251 about the first-center-swing axis UI and swing of the lower cross member 252 about the second-center-swing axis DI are restricted by the stopper 207 in accordance with leaning of the vehicle 201 so that displacement of the left front wheel 231 and the right front wheel 232 in the top-bottom direction is suppressed.

This can suppress leaning of the vehicle body 202, for example.

### [Sixth Embodiment]

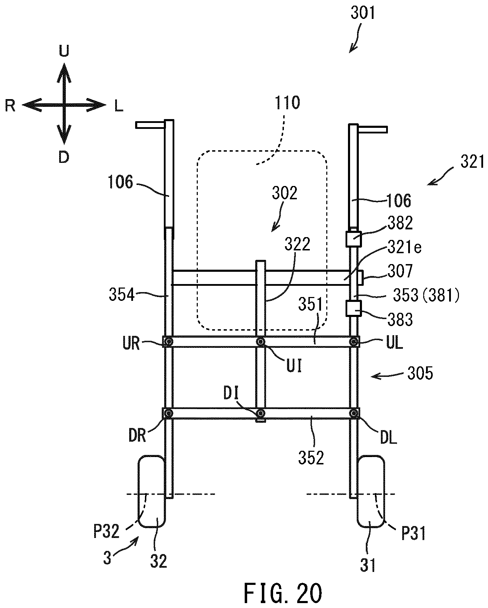

FIG. 20 is a view schematically illustrating a configuration of a vehicle front portion when a vehicle 301 according to a sixth embodiment is seen from the front. In the vehicle 301, a configuration of a stopper 307 that restricts swing of an upper cross member 351 about a first-center-swing axis UI and swing of a lower cross member 352 about a second-center-swing axis DI is different from that of the vehicle 101 of the fourth embodiment. In the following description, components similar to those of the fourth embodiment are denoted by the same reference characters and will not be described again, and components different from those of the fourth embodiment will be described.

The vehicle 301 includes a vehicle body 302, a pair of left and right front wheels 3, a pair of left and right rear wheels 4 (see FIG. 15), a linkage mechanism 305, an operation handle 106, and a seat 110.

The vehicle body 302 includes a body frame 321 supporting a pair of left and right rear wheels 4, and a linkage-mechanism-support part 322 supporting the linkage mechanism 305 (front-wheel-displacement-linkage mechanism).

The body frame 321 supports the linkage-mechanism-support part 322 and the pair of left and right rear wheels 4. The body frame 321 is constituted by, for example, a pipe-shaped member. The body frame 321 includes a left main frame 121a, a right main frame 121b, and a lower connecting frame 121c illustrated in FIG. 15, and an upper connecting frame 321e illustrated in FIG. 20. Configurations of the left main frame 121a, the right main frame 121b, the lower connecting frame 121c, and the upper connecting frame 321e are similar to those of the fourth embodiment. Thus, the configurations of the left main frame 121a, the right main frame 121b, the lower connecting frame 121c, and the upper connecting frame 321e will not be described in detail. The upper connecting frame 321e has a left end portion functioning as a stopper 307. Function of the upper connecting frame 321e as the stopper 307 will be described in detail later.

The linkage-mechanism-support part 322 is located forward of the body frame 321. An upper end portion of the linkage-mechanism-support part 322 is connected to a center portion of the upper connecting frame 321e in the left-right direction. The upper connecting frame 321e is connected to the left main frame 121a and the right main frame 121b. That is, the upper connecting frame 321e supports the linkage mechanism 305 through the linkage-mechanism-support part 322. The upper connecting frame 321e includes the stopper 307. The stopper 307 is made of a metal or the like having a certain degree of strength. In this embodiment, the stopper 307 is disposed near the left main frame 121a.

As will be described later, the linkage-mechanism-support part 322 supports an upper cross member 351 of the linkage mechanism 305 such that the upper cross member 351 is swingable about a first-center-swing axis UI, and supports a lower cross member 352 such that the lower cross member 352 is swingable about a second-center-swing axis DI.

The other part of the configuration of the body frame 321 is similar to that of the body frame 121 of the fourth embodiment. Thus, the body frame 321 will not be described in detail.

The linkage mechanism 305 is supported by the linkage-mechanism-support part 322 to be swingable in the top-bottom direction when the vehicle 301 is seen from the front. The linkage mechanism 305 includes the upper cross member 351 (first swing lever), the lower cross member 352 (second swing lever), the left side member 353 (left-front-wheel support), and the right side member 354 (right-front-wheel support). As in the fourth embodiment, the linkage mechanism 305 is a linkage mechanism of a parallel four-bar linkage (also called parallelogram linkage) type linkage mechanism.

The configurations of the upper cross member 351, the lower cross member 352, and the right side member 354 of the linkage mechanism 305 are similar to the configurations of the upper cross member 151, the lower cross member 152, and the right side member 154 of the linkage mechanism 105 of the fourth embodiment. In this embodiment, an upper contact member 382 (first contact member) and a lower contact member 383 (second contact member) are connected to the left side member 153. A part of the left side member 353 of the linkage mechanism 305 constitutes a part of the support member 381 described later. The other part of the configuration of the left side member 353 is similar the configuration of the left side member 153 of the linkage mechanism 105 according to the fourth embodiment.

That is, the upper cross member 351 is supported by the linkage-mechanism-support part 322 to be swingable about the first-center-swing axis UI. The lower cross member 352 is supported by the linkage-mechanism-support part 322 to be swingable about the second-center-swing axis DI.

The left end of the upper cross member 351 is connected to the left side member 353 to be swingable about a first-left-swing axis UL. The first-left-swing axis UL is parallel to the first-center-swing axis UI.

The left end of the lower cross member 352 is connected to the left side member 353 to be swingable about a second-left-swing axis DL. The second-left-swing axis DL is parallel to the second-center-swing axis DI.

The right end of the upper cross member 351 is connected to the right side member 354 to be swingable about a first-right-swing axis UR. The first-right-swing axis UR is parallel to the first-center-swing axis UI.

The right end of the lower cross member 352 is connected to the right side member 354 to be swingable about a second-right-swing axis DR. The second-right-swing axis DR is parallel to the second-center-swing axis DI.

In a manner similar to the fourth embodiment, the upper cross member 351, the lower cross member 352, the left side member 353, and the right side member 354 are supported by the vehicle body 302 such that the upper cross member 351 and the lower cross member 352 are kept in parallel with each other, and the left side member 353 and the right side member 354 are kept in parallel with each other. That is, the upper cross member 351 and the lower cross member 352 are rotatably supported by the linkage-mechanism-support part 322 as described above. The left side member 353 and the right side member 354 move in the top-bottom direction relative to the vehicle body 302, when the vehicle 301 is seen from the front.

An operation of the linkage mechanism 305 is similar to that of the linkage mechanism 105 of the fourth embodiment. Thus, the operation of the linkage mechanism 305 will not be described in detail. A support structure of the pair of front wheels 3 by the linkage mechanism 305 is similar to a support structure of the pair of front wheels 3 by the linkage mechanism 105 according to the fourth embodiment. Thus, the support structure of the pair of front wheels 3 by the linkage mechanism 305 will not be described in detail.

The support member 381 extends from the left side member 353 or the right side member 354 in a direction in which the left side member 353 or the right side member 354 moves. In this embodiment, the support member 381 is constituted by a part of the left side member 353 located above the first-left-swing axis UL. When the linkage mechanism 305 is operated, the support member 381 moves upward and downward while being kept in parallel with the left side member 353 and the right side member 354. The support member 381 is configured to overlap with the stopper 307 of the upper connecting frame 321e in the range of the upward and downward movement. The support member 381 includes a plurality of attachment portions to which the upper contact member 382 and the lower contact member 383 are attached. The plurality of attachment portions are arranged along the direction in which the support member 381 moves. The plurality of attachment portions are, for example, screw holes. The support member 381 as a separate member from the left side member 353 may be connected to a portion of the left side member 353 above the first-left-swing axis UL. A part of the left side member 353 serving as the support member 381 will be hereinafter referred to as the support member 381, for description.

The upper contact member 382 and the lower contact member 383 are members with which the stopper 307 is to be brought into contact. The upper contact member 382 and the lower contact member 383 are connected to any intended positions on the support member 381 with a predetermined interval. The upper contact member 382 is located above the stopper 307. The lower contact member 383 is located below the stopper 307. The upper contact member 382 and the lower contact member 383 are constituted by, for example, elastic members. The upper contact member 382 and the lower contact member 383 may be made of any materials and have any shapes that enable the upper contact member 382 and the lower contact member 383 to be fixed to the support member 381.

In a case where the left side member 353 moves downward to a predetermined distance relative to the upper connecting frame 321e, the upper contact member 382 is brought into contact with the stopper 307. That is, the upper contact member 382 restricts downward movement of the left side member 353. In a case where the left side member 353 moves upward to a predetermined distance relative to the upper connecting frame 321e, the lower contact member 383 is brought into contact with the stopper 307. That is, the upper contact member 382 restricts upward movement of the left side member 353. As described above, the stopper 307 is disposed between the support member 381 that is movable relative to the vehicle body 302 by an operation of the linkage mechanism 305 and the upper connecting frame 321e that is non-movable relative to the vehicle body 302 by an operation of the linkage mechanism 305.

The attachment positions of the upper contact member 382 and the lower contact member 383 are determined in consideration of a relationship between weight distribution of the vehicle 301, for example, and displacement of the left front wheel 31 and the right front wheel 32 in the top-bottom direction.

Next, restriction of an operation of the linkage mechanism 305 by the stopper 307, the upper contact member 382, and the lower contact member 383 will be described. An operation of the linkage mechanism 305 with respect to a change of the position of the barycenter G of the vehicle 301 is similar to that in the case of the vehicle 101 according to the fourth embodiment, and thus, will not be described in detail.

When the upper cross member 351 and the lower cross member 352 swing about the first-center-swing axis UI and the second-center-swing axis DI, the left side member 353 and the right side member 354 move upward and downward relative to the body frame 321. Thus, the support member 381 as a part of the left side member 353 moves upward and downward relative to the body frame 321 with movement of the left side member 353.

When the left side member 353 moves upward, the upper surface of the lower contact member 383 is brought into contact with the lower surface of the stopper 307. When the left side member 353 moves downward, the lower surface of the upper contact member 382 is brought into contact with the upper surface of the stopper 307. Accordingly, swing of the upper cross member 351 about the first-center-swing axis UI and swing of the lower cross member 352 about the second-center-swing axis are restricted.

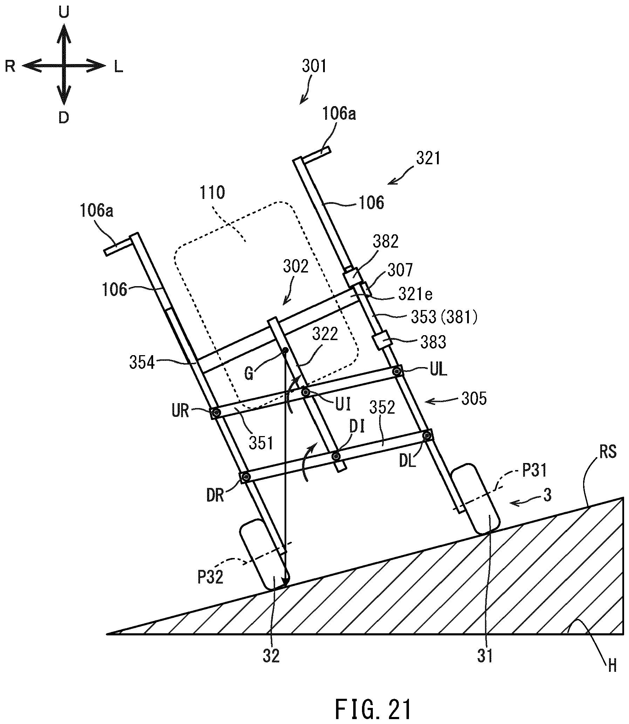

FIG. 21 is a view illustrating a state where the linkage mechanism 305 is operated by rightward leaning of the vehicle 301 because of a slope of a road surface RS. When the linkage mechanism 305 is operated, the lower surface of the upper contact member 382 is brought into contact with the upper surface of the stopper 307. Accordingly, leaning of the vehicle body 302 is restricted.

In this embodiment, the left side member 353 supporting the left front wheel 31 that moves relative to the vehicle body 302 is directly restricted by the stopper 307, the upper contact member 382, and the lower contact member 383. The vehicle 301 can suppress displacement of the left front wheel 31 due to warpage of members constituting the linkage mechanism 305 occurring when the upper contact member 382 or the lower contact member 383 is brought into contact with the stopper 307. In addition, the range of movement of the left side member 353 can be defined depending on the positions of the upper contact member 382 and the lower contact member 383 relative to the stopper 307. Accordingly, the barycenter of the vehicle can be easily positioned within a predetermined range. As a result, leaning of the vehicle body, for example, can be easily suppressed.

### (Other Embodiments)

The embodiments of the present teaching have been described above, but the embodiments are merely examples for carrying out the present teaching. Thus, the present teaching is not limited to the embodiments described above, and the embodiments may be modified as necessary within a range not departing from the gist of the present teaching.

In the embodiments, the vehicle 1, 101, 201, 301 includes the linkage mechanism 5, 105, 205, 305 supporting the pairs of left and right front wheel 3, 203. Alternatively, a vehicle may include a linkage mechanism supporting a pair of left and right rear wheels. The vehicle may include a front linkage mechanism supporting the pair of left and right front wheels and a rear linkage mechanism supporting the pair of left and right rear wheels.

In the embodiments, the vehicle 1, 101, 201, 301 does not include a driving source for driving the wheel. Alternatively, a vehicle may include a driving source for driving the wheels.

In the fourth, fifth, and sixth embodiments, the first-center-swing axis UI and the second-center-swing axis DI of the linkage mechanism 105, 205, 305 extend in the front-rear direction and in the top-bottom direction so as to gradually elevate from the rear toward the front. Alternatively, the first-center-swing axis UI and the second-center-swing axis DI may extend in the front-rear direction and substantially in the horizontal direction in a manner similar to the first embodiment. In the configurations of the first embodiment, in a manner similar to the fourth, fifth, and sixth embodiments, the first-center-swing axis and the second-center-swing axis of the linkage mechanism may extend in the front-rear direction and in the top-bottom direction so as to gradually elevate from the rear toward the front.

In the fourth, fifth, and sixth embodiments, the pair of front wheels 3, 203 are caster wheels. Alternatively, only one of the pair of front wheels may be a caster wheel. The pair of front wheels may not rotate with respect to the body frame about the rotation axis line extending in the top-bottom direction. At least one of the pair of rear wheels may be a caster wheel. In the configuration of the first embodiment, at least one of the pair of front wheels may be a caster wheel. In the first embodiment, at least one of the pair of rear wheels may be a caster wheel.

In the fourth embodiment, the operation handles 106 extends from the left main frame 121a and the right main frame 121b upward and rearward so as to gradually elevate toward the rear. Alternatively, the operation handle may be configured to be switchable between a first position in which the operation handle extends upward and rearward so as to gradually elevate toward the rear and a second position in which the operation handle extends upward and forward so as to gradually elevate toward the front, with respect to the body frame. Accordingly, an operation position of an operator of the vehicle can be switched between a rear position and a front position with respect to an infant seated on the seat.

As described above, in the case of the configuration in which the operation handle is switchable between the first position and the second position, the traveling mode of the vehicle is switched between a first traveling mode in which the vehicle can travel in one direction and a second traveling mode in which the vehicle can travel in the opposite direction. That is, in the case where the operation handle is in the first position, the traveling mode of the vehicle is the first traveling mode, whereas in the case where the operation handle is in the second position, the traveling mode of the vehicle is the second traveling mode.

Thus, for example, a wheel functioning as a front wheel in the first traveling mode functions as a rear wheel in the second traveling mode. Accordingly, in the case where the position of the operation handle is switchable as described above, in the configuration of the second embodiment, if the traveling mode of the vehicle is the first traveling mode, the linkage mechanism functions in a front portion of the vehicle in the traveling direction, whereas if the traveling mode of the vehicle is the second traveling mode, the linkage mechanism functions in a rear portion of the vehicle in the traveling direction.

Alternatively, not only the pair of left and right front wheels of the vehicle, but also the pair of left and right rear wheels may be supported on the body frame by the linkage mechanism. In this case, the vehicle includes a lock mechanism that locks the linkage mechanism such that the linkage mechanism located in the rear portion of the vehicle in the traveling direction does not function depending on the position of the operation handle. The lock mechanism locks the pair of cross members and the pair of side members in the linkage mechanism, locks the pair of cross members, or locks the pair of side members such that the cross member and the side members do not move relative to each other.

With the configuration described above, even in the case where the operation handle is switched between the first position and the second position, advantages similar to those of the second embodiment can be obtained.

In a case where the positions of the operation handles are switchable as described above, only one of the pair of left and right rear wheels may be supported on the body frame by the linkage mechanism in the configuration of the fourth embodiment. In this case, when the operation handles are set in the second position, the pair of left and right rear wheels function as front wheels, and thus, advantages similar to those of the fourth embodiment are obtained.

The configuration capable of switching the position of the operation handle as described above may be applied to the vehicles of the first, fifth, and sixth embodiments.

In the fourth and fifth embodiments, each of the left front wheel 31, 231 and the right front wheel 32, 232 is a caster wheel that rotates about the rotation axis extending in the top-bottom direction. Alternatively, at least one of the left front wheel or the right front wheel may be a wheel that does not rotate about the rotation axis extending in the top-bottom direction. At least one of the left rear wheel or the right rear wheel may be a wheel that rotates about the rotation axis extending in the top-bottom direction.

In the fourth embodiment, the linkage mechanism 105 is configured such that in the left-right direction of the vehicle 101, the left front wheel 31 is located closer to the left rear wheel 41 than the first-center-swing axis UI and the second-center-swing axis DI, and the right front wheel 32 is located closer to the right rear wheel 42 than the first-center-swing axis UI and the second-center-swing axis DI, when the vehicle 101 is seen from the front. Alternatively, the linkage mechanism may be configured such that in the left-right direction of the vehicle, the left front wheel is located closer to the first-center-swing axis and the second-center-swing axis than the left rear wheel and that the right front wheel is located closer to the first-center-swing axis and the second-center-swing axis than the right rear wheel, when the vehicle is seen from the front. That is, the configuration of the left front wheel and the right front wheel is not limited to the configuration of the fourth embodiment. In the first and fifth embodiments, the left front wheel and the right front wheel may be disposed in a manner similar to the fourth embodiment.

In the sixth embodiment, the stopper 307 is located at the left end portion of the upper connecting frame 321e. Alternatively, the stopper may be located at the right end portion of the upper connecting frame. The support member 381 is located at the left side member 353. Alternatively, the support member may be located at the right side member. Stoppers may be disposed at both end portions of the upper connecting frame with support members being disposed in both the left side member and the right side member. The configurations of the stopper and the support member of the sixth embodiment may be applied to the vehicles of the first and fifth embodiments.

In the sixth embodiment, the stopper 307 is disposed at the left end portion of the upper connecting frame 321e. Alternatively, the stopper may be integrated with the upper connecting frame.

In the embodiments, the linkage mechanism 5, 105, 205, 305 includes the upper cross member 51, 151, 251, 351 located forward of the linkage-mechanism-support part 22, 122, 222, 322. Alternatively, the linkage mechanism may include a rear upper cross member rearward of the upper cross member and the linkage-mechanism-support part. The linkage mechanism may include a front upper cross member located forward of the linkage-mechanism-support part, and a rear upper cross member located rearward of the linkage-mechanism-support part.

In the first through fifth embodiments, the stopper 7, 7a, 7b, 107, 207 are provided at the lower end portions of the linkage-mechanism-support part 22, 122, 222 to be brought into contact with the lower cross member 52, 152, 252. Alternatively, the stopper may be provided at the upper end portion of the linkage-mechanism-support part to be brought into contact with the upper cross member.

In the first through fifth embodiments, the stopper 7, 7a, 7b, 107, 207 is disposed between the lower cross member 52, 152, 252 that is movable relative to the vehicle body 2, 102, 202 by an operation of the linkage mechanism 5, 105, 205 and the linkage-mechanism-support part 22, 122, 222 that is non-movable relative to the vehicle body 2, 102, 202 by an operation of the linkage mechanism 5, 105, 205. In the sixth embodiment, the stopper 307 is disposed between the support member 381 that moves relative to the vehicle body 302 by an operation of the linkage mechanism 305 and the upper connecting frame 321e that does not move relative to the vehicle body 302 by an operation of the linkage mechanism 305. Alternatively, the stopper may be disposed between another member that moves relative to the vehicle body by an operation of the linkage mechanism and another member that does not move relative to the vehicle body by an operation of the linkage mechanism as long as the stopper can restrict swing of the upper cross member about the first-center-swing axis UI and swing of the lower cross member about the second-center-swing axis DI such that the barycenter of the vehicle is located within a predetermined range.

For example, in the configuration of the sixth embodiment, the vehicle may include a support member extending downward from the upper connecting frame. The support member extends in parallel with the linkage-mechanism-support part. The support member is configured to overlap with the upper cross member when seen forward. In a manner similar to the sixth embodiment, the upper contact member and the lower contact member are connected to the support member. The upper contact member is located above the upper cross member. The lower contact member is located below the upper cross member. The upper cross member includes the stopper. The stopper is located to overlap with the support member when seen forward. When the linkage mechanism is operated, the upper cross member swings with respect to the support member. That is, when the linkage mechanism is operated, the upper cross member moves upward and downward between the upper contact member and the lower contact member relative to the support member. Accordingly, the upper contact member and the lower contact member restrict upward and downward movement of the upper cross member. Thus, the vehicle can restrict swing of the upper cross member about the first-center-swing axis UI and swing of the lower cross member about the second-center-swing axis DI by the stopper such that the barycenter is located within a predetermined range.

In the embodiment, the stopper 7, 7a, 7b, 107, 207, 307 is disposed between a member that moves relative to the vehicle body 2, 102, 202, 302 by an operation of the linkage mechanism 5, 105, 205, 305 and a member that does not move relative to the vehicle body 2, 102, 202, 302 by an operation of the linkage mechanism 5, 105, 205, 305. Alternatively, the stopper may be provided between members that move relative to the vehicle body by an operation of the linkage mechanism.

For example, the vehicle may include a stopper that restricts a distance between the lower cross member and the upper cross member that varies in accordance with an operation of the linkage mechanism. The stopper is supported by the lower cross member or the upper cross member. In a case where the stopper is supported by the lower cross member, the stopper is configured to be brought into contact with the upper cross member by an operation of the linkage mechanism. In a case where the stopper is supported by the upper cross member, the stopper is configured to be brought into contact with the lower cross member by an operation of the linkage mechanism. In the linkage mechanism of a parallel four-bar linkage type, when the linkage mechanism is operated, the distance between the upper cross member and the lower cross member in the top-bottom direction is reduced. That is, when the vehicle body leans leftward or rightward, the upper cross member moves upward and downward relative to the coupling member. Thus, the stopper restricts upward and downward movement of the upper cross member. Thus, the stopper can restrict swing of the upper cross member about the first-center-swing axis UI and swing of the lower cross member about the second-center-swing axis DI such that the barycenter of the vehicle is located within a predetermined range.

For example, the vehicle may include a stopper that is fixed to the linkage-mechanism-support part and restricts the range of swing of the upper cross member or the lower cross member with respect to the swing axis swingably supporting the upper cross member or the lower cross member. The vehicle may also include a stopper that is fixed to the upper cross member or the lower cross member and restricts the range of movement of the swing axis swingably supported by the linkage-mechanism-support part with respect to the linkage-mechanism-support part.

The stopper may be provided in at least one of the left side member 53, 153, 253 or the right side member 54, 154, 254 to restrict swing of the upper cross member 51, 151, 251 about the first-center-swing axis UI and swing of the lower cross member 52 about the second-center-swing axis DI.

In the third embodiment, the spring element (spring member 77) or the buffer element (elastic member 71) that applies a resistance for reducing energy exerted on the vehicle body is provided in the stopper 7. Alternatively, the spring element (spring member) or the buffer element (elastic member) may be provided in the linkage mechanism 5 or may be provided in each of the stopper 7 and the linkage mechanism 5. The spring element (spring member) or the buffer element (elastic member) may be disposed between the upper cross member and the left or right side member. Similarly, the spring element (spring member) or the buffer element (elastic member) may be disposed between the lower cross member and the left or right side member.

The configurations of the embodiments may be applied to other vehicles such as a wheelchair. That is, the configuration of each embodiment is applicable to any four-wheeled vehicle as long as the vehicle is required to suppress leaning of a vehicle body while the vehicle travels or is stopped on a road surface sloped relative to the left-right direction of the vehicle body.

### Reference Signs List

1, 101,201, 301 vehicle
2, 102, 202, 302 vehicle body
3, 203 front wheel
4, 204 rear wheel
5, 105, 205, 305 linkage mechanism (front-wheel-displacement-linkage mechanism)
6, 106, 206 operation handle
7, 7a, 7b, 107, 207, 307 stopper
21, 121,221,321 body frame
22, 122, 222, 322 linkage-mechanism-support part
31, 231 left front wheel
32, 232 right front wheel
41, 241 left rear wheel
42, 242 right rear wheel
51, 151, 251, 351 upper cross member (first swing lever)
52, 152, 252, 352 lower cross member (second swing lever)
53, 153, 253, 353 left side member (left-front-wheel support)
54, 154, 254, 354 right side member (right-front-wheel support)
106a holder portion
110 seat
121a left main frame
121b right main frame
121c connecting frame
121d reinforcing frame
121e, 321e upper connecting frame
221 carriage
381 support member
382 upper contact member (first contact member)
383 lower contact member (second contact member)
UI first-center-swing axis
DI second-center-swing axis
UL first-left-swing axis
DL second-left-swing axis
UR first-right-swing axis
DR second-right-swing axis
G barycenter
P31 left-front-wheel-rotation axis
P32 right-front-wheel-rotation axis
P41 left-rear-wheel-rotation axis
P42 right-rear-wheel-rotation axis
WL left rotation axis
WR right rotation axis

## Claims

1. A vehicle including
a vehicle body configured to stand on its own while the vehicle is stopped and configured not to lean while the vehicle is turning on a flat road surface,
a left rear wheel and a right rear wheel supported by the vehicle body, a traveling direction of each of the left rear wheel and the right rear wheel being fixed in a front-rear direction, and
a left front wheel and a right front wheel supported by the vehicle body, the vehicle comprising
a front-wheel-displacement-linkage mechanism including
a first swing lever that is a member extending in a left-right direction, the first swing lever having a center portion in the left-right direction supported by the vehicle body to be swingable about a first-center-swing axis, the first-center-swing axis extending in the front-rear direction of the vehicle body,
a second swing lever that is a member extending in the left-right direction, the second swing lever having a center portion in the left-right direction located below the first swing lever and supported by the vehicle body to be swingable about a second-center-swing axis, the second-center-swing axis extending in the front-rear direction of the vehicle body,
a left-front-wheel support that is a member extending in the top-bottom direction, the left-front-wheel support being supported by a left end portion of the first swing lever to be swingable about a first-left-swing axis extending in the front-rear direction of the vehicle body, the left-front-wheel support being supported by a left end portion of the second swing lever to be swingable about a second-left-swing axis extending in the front-rear direction of the vehicle body, the left-front-wheel support supporting the left front wheel,
a right-front-wheel support that is a member extending in the top-bottom direction, the right-front-wheel support being supported by a right end portion of the first swing lever to be swingable about a first-right-swing axis extending in the front-rear direction of the vehicle body, the right-front-wheel support being supported by a right end portion of the second swing lever to be swingable about a second-right-swing axis extending in the front-rear direction of the vehicle body, the right-front-wheel support supporting the right front wheel, and
a stopper configured to restrict swing of the first swing lever about the first-center-swing axis and swing of the second swing lever about the second-center-swing axis, wherein
the front-wheel-displacement-linkage mechanism is configured to support the left front wheel and the right front wheel on the vehicle body such that the left front wheel and the right front wheel are displaceable in the top-bottom direction, and to restrict leaning of the vehicle body in the left direction or in the right direction by displacement of the left front wheel and the right front wheel in the top-bottom direction relative to the vehicle body, and
the stopper is provided in at least one of the front-wheel-displacement-linkage mechanism or the vehicle body such that a barycenter of the vehicle is located within a range of a first triangle in a plan view in a state where the stopper restricts an operation of the front-wheel-displacement-linkage mechanism, the first triangle being formed by a ground point of the left front wheel, a ground point of the right front wheel, and a ground point of a lower one of the left rear wheel or the right rear wheel in the top-bottom direction.

2. The vehicle according to claim 1, wherein
the stopper restricts swing of the first swing lever about the first-center-swing axis and swing of the second swing lever about the second-center-swing axis in a case where the barycenter of the vehicle is located within the range of the first triangle and is located outside a second triangle in a plan view, the second triangle being formed by an intermediate point between the ground point of the left front wheel and the ground point of the right front wheel, a ground point of the left rear wheel, and a ground point of the right rear wheel.

3. The vehicle according to claim 2, wherein
the stopper restricts swing of the first swing lever about the first-center-swing axis and swing of the second swing lever about the second-center-swing axis in a case where, in a plan view, the barycenter of the vehicle is located within the range of the first triangle and is located at a position closer to an outline connecting the ground point of the lower one of the left rear wheel or the right rear wheel in the top-bottom direction and a ground point of a lower one of the left front wheel or the right front wheel in the top-bottom direction in an outline of the first triangle than an outline connecting the ground point of the lower one of the left rear wheel or the right rear wheel in the top-bottom direction to the intermediate point in an outline of the second triangle, in the left-right direction.

4. The vehicle according to any one of claims 1 to 3, wherein
the stopper is disposed between a member that is movable relative to the vehicle body by an operation of the front-wheel-displacement-linkage mechanism and a member that is non-movable relative to the vehicle body by an operation of the front-wheel-displacement-linkage mechanism.

5. The vehicle according to any one of claims 1 to 4, wherein
the left-front-wheel support or the right-front-wheel support includes
a support member extending in a direction in which the left-front-wheel support or the right-front-wheel support moves by an operation of the front-wheel-displacement-linkage mechanism, and
a first contact member and a second contact member supported by the support member with a predetermined interval, and
the stopper is provided in the vehicle body to be disposed between the first contact member and the second contact member, and is configured to be brought into contact with the first contact member or the second contact member by movement of the support member due to movement of the left-front-wheel support or the right-front-wheel support.

6. The vehicle according to any one of claims 1 to 5, wherein
the left front wheel is located closer to the left rear wheel than the first-center-swing axis and the second-center-swing axis when the vehicle is seen from the front, and
the right front wheel is located closer to the right rear wheel than the first-center-swing axis and the second-center-swing axis when the vehicle is seen from the front.

7. The vehicle according to any one of claims 1 to 6, wherein
the front-wheel-displacement-linkage mechanism includes at least one of a spring element or a buffer element, the spring element or the buffer element being configured to apply a resistance for reducing energy exerted on the vehicle body to the first swing lever and the second swing lever when the first swing lever and the second swing lever swing in a range of swing of the first swing lever about the first-center-swing axis and a range of swing of the second swing lever about the second-center-swing axis, and
the stopper restricts swing of the first swing lever about the first-center-swing axis and swing of the second swing lever about the second-center-swing axis in a state where the at least one of the spring element or the buffer element applies the resistance to the first swing lever and the second swing lever.
